# EUROPEAN PATENT APPLICATION

(11) **EP 2 790 251 A1**
(43) Date of publication of application: **15.10.2014**
(21) Application number: 12852437.8
(22) Date of filing: 03.12.2012
(51) Int. Cl.: H01M 4/02, H01L 41/00

(54) **RECEIVING, CONVERTING AND EMITTING BATTERY WORKING ACCORDING TO THE ACTIVE MAGNETOHYDRORESONANT EFFECT, METHOD FOR PREPARING HYDRORESONANT AND BIOMAGNETIC COMPOUNDS, METHOD FOR PREPARING THE BATTERY, AND GENERAL USE OF THE SAME IN THE MINERAL, PLANT AND ANIMAL KINGDOMS**

(30) Priority: 05.12.2011 BR PI1107189
(71) Applicant: Martins, Valmeron, 98.700-000 Ljuí - RS (BR); Koerich, Pedro Jonas, 88.025-000 Florianópolis - SC (BR)
(72) Inventor: Martins, Valmeron, 98.700-000 Ljuí - RS (BR); Koerich, Pedro Jonas, 88.025-000 Florianópolis - SC (BR)
(74) Representative: Müller Schupfner & Partner Patent- und Rechtsanwaltspartnerschaft mbB
(86) International application number: PCT/BR2012/000491
(87) International publication number: WO 2013/082684

(57) **Abstract**

The present invention relates to a receiving, converting and emitting battery of the active Magnetohydroresonant effect, method for preparing hydroresonant and biomagnetic compounds, method for preparing the battery, and general use of the same in the mineral, plant and animal kingdoms. The battery is formed from a mixture that comprises hydroresonant compounds, biomagnetic compounds, polypropylene and black tourmaline. Also disclosed is the method for preparing the hydroresonant and biomagnetic compounds. The battery can be prepared by solidification of hydroresonant water energies, purification and dynamization of black tourmaline powder crystals, by solidification of multicrystals and hydroresonant water in polypropylene, injected into strips that are mechanically coupled to form the battery. The battery, according to the present invention, can be used to convert the photoelectric energy in natural light into mechanical energy, to reduce fuel consumption and the emission of pollutant gases; in electrical systems, it reduces harmonics and saves energy; in communications systems, it converts the electromagnetic waves of positive signals (cations) into negative signals (anions), amplifies radio, data and video signals, and reduces shadow zones; it revitalizes and softens water hardness; it reduces industrial smells; it produces a pre-electronic environment in steel mills; in agriculture, it increases absorption of minerals from the soil and air, the Brix degree, the phytotonic effect, preserves food integrity and produces an active Magnetohydroresonant effect.

## Description

The present invention of the Receiving, Converting and Emitting Battery of the active Magnetohydroresonant effect belongs to the physicochemical energy sector. The Battery, formed by the solid hydroresonant and biomagnetic compounds injected into strips and mechanically coupled, is the final object of the present invention process, with properties to emit natural long-wave infrared light, to capture and emit vital cosmic energy and to emit negative ions (anions), enabling the reduction of consumption in combustion processes and emission of greenhouse gases - GHG, to convert positive ions (cations) into negative ions (anions), to neutralize the harmful action of electromagnetic radiations, to reestablish and/or create a healthy environment where it is directly or indirectly present, through active or inactive diffusing vectors, irradiant of this new way of interaction and energy emission with the planet. Vital Cosmic Energy, (immanent energy or universal energy), source that generates all the things created in the mineral, plant and animal kingdoms, which Hippocrates called 'vis medicatrix naturae' (vital force of nature), and is present in the essence of all things, interacts with and is present in all existent physicochemical reactions that enable life on the planet as we know it. That is: vital cosmic energy, or vital energy, permanently interacts in the physicochemical reactions that occur between the three kingdoms, and while it connects these kingdoms by mixing their properties it also separates them, perfectly and synchronically occurring all the time, which also endows man with the perceptive capacity to participate, interact and act in the physicochemical processes, accelerating some phenomena and delaying others. Some of these phenomena are already known and mastered by mankind, who manipulates them according to his own purposes, which we call science and are catalogued by it as, for example: photosynthesis science, electricity, magnetism, radio and others. In the course of this report we will discuss some of them, utilizing the prototype of the object of the present patent of invention in laboratory with a research intention, applying the prototype in physicochemical processes, altering the results expected by science in similar experiments, a fact which we understand as a real break of paradigms such as: the combustion science paradigm, the electricity harmonics science, among others. Today, we live in the global communications era; our biosphere is an ocean of electromagnetic radiations and communication systems in all frequency bands, so that some cell phone frequency bands in the big urban centers are already saturated. Thousands of kilowatt-hours of electric energy are emitted, transformed into communication electromagnetic waves through Aether, these waves of photons charged with positive ions (cations), which revitalize and add to the positive ions (cations) of the particles from polluting gases that cause the greenhouse effect - GHG, produced by vehicular systems, thermal energy generation systems and other industrial uses, producing the low ozone layer O³.

These particles taken by the winds in the atmosphere spread cancerous dioxins all over the planet, which return to man in the form food of plant or animal origin. These anomalies alter the biorhythm of the Earth's plasma that works as a kind of pacemaker, which resonates normally in a 7,83 to 13,5 hertz frequency, and is responsible for the biosphere balance, a condition which is common to all forms of life, equally the brains of all vertebrates are endowed with the same frequency. Today, man's constant exposure to artificial electromagnetic fields, communication systems, automation and even residential energy potentialized in household appliances, causes health instability.

Such imbalance has also been occurring in the planet, with melting of glaciers, death of large coral reefs, forests in Europe with more than 50% of their area degraded by air pollution and acid rains, besides the decline in agricultural production, foods without vigor and contaminated by toxic agrochemicals, children with damaged bone structure and mother producing breast milk containing toxic agrochemicals of agricultural origin (USP), as a consequence of the changes in frequency of the biosphere. Several scientific works have been done, in an attempt to control these imbalances, especially in the area of mineralogy of black tourmaline crystals. Many pieces of equipment have been developed based on its properties to produce negative ions (anions), and natural long-wave infrared, but these works are restricted to UV (ultraviolet) and natural LWIR (natural long-wave infrared), generating innumerous patents that use these natural state crystals in the form of ceramic ingots or in mixtures, with their action restricted to the place where they are installed. In search for technology innovation capable of withstanding the environmental imbalance humanity has been going through, we have developed an innovative technology which is able to unite, within one single matrix, the capacity of returning the natural frequencies to the planet. The origin of the imbalances is found in the origin of electrical energy production, generator of positive ions (cations) wrongfully utilized by man.

All the investments made for the utilization of fossil fuels including their reserves are threatened by the effects of the greenhouse gases - GHG. If the expansionist policy imposed by the demographic demand is maintained, in some moment, it will collide against the limit of environmental and thermal sustainability of the planet, therefore scrapping the entire installed park and the fossil fuels reserves.

### General Goals of the Invention

In the research for the creation of the innovative technology, we searched for and recreated the water anomalies which reproduce the natural biorhythms of the planet, associated to the purified and potentialized crystals of the black tourmaline powder, broadening and expanding its scope of action, potentializing the capacity to convert positive ions (cations) into negative ions (anions), in all bands of the electromagnetic spectrum. Then, we have created a technology which, if applied in the energy utilized in the generation of communication signals, has its effect transported and perpetuated for all the environment within the range of its action, thus neutralizing the harmful effects in the origin of these signals, producing pre-electronic, healthy environments, and within the natural biorhythm of the Earth (between 7,83 and 13,5 telluric hertz). It also enables the reduction in consumption and emission of greenhouse gases (GHG), the production of more abundant agricultural harvests, and production of new pre-electronic, unpolluted and healthy environments in the reception location.

There was a need for something new in the science field, in the technological innovation field, to leverage humanity from the stalemate it has reached, by continuing the current cycle of economic growth, exceeding the limit of exploration and utilization of the planet's natural resources, due to pressures imposed by demographic growth, demanding greater production of food, more generation of energy and broadening of communication services, basic segments which support socio-economic development. Basic segments which, however, are the cause of global warming, also causing delays in expansionist decisions by the stalemates they generate, which we believe is the present reason of the global economy slowdown.

### Studies and patents of products with properties of the black tourmaline

In his doctoral dissertation, José Maria Leal conducted a research about the utilization of Black Tourmaline Powder, in which he presents several aspects of the use of this mineral in the development of new technological innovation fields. Analyzing hundreds of patents, it is evident that the properties of long-wave infrared emission and negative ions emission are employed, within a restricted band range to UV (ultraviolet) until LWIR (long-wave infrared), being the totality of patents of products presented mixtures or ceramic compounds with natural crystal powder, with their action restricted to short distance and local statics and to the fact of not irradiating conducting vectors with the inconvenience of the volume of mineral applied.

"Tourmaline is a gem-mineral, regarded as the stone of a thousand colors, due to the several colors it may present. When it is transparent and colorful, with a defined hue and good balance between tonality and saturation, it reaches values of thousands of dollars per gram. This dissertation refers to black tourmaline, which, contrary to colorful tourmaline, is abundant and has low value. Its use is common even to pave dirt roads. Black tourmaline may occur in any geological environment, which explains its abundance. Its use in the jewelry industry is restricted. It is used in the confection of balls, beads for necklaces, or used in other types of mineral handcraft. The interest for black tourmaline in the international market appeared in the mid-1990s, mainly in the Far East countries. This dissertation was motivated by the interest from Brazilian businessmen who export black tourmaline. They desire to better understand this emergent market and, maybe, aggregate value to black tourmaline.

The pyroelectric properties may be observed by means of heating the sample, when the valor of its spontaneous polarization alters and this variation is observed. The greatest part of the surface of a tourmaline crystal identifies with negative energy. Negative electric atmospheric particles adhere to its surface until the neutralization of the electric field produced by spontaneous polarization. As every pyroelectric crystal is also piezoelectric, a mechanical tension is applied in such a way that it attenuates the spontaneous polarization, releasing the negative ions adhered to its surface. This fact may explain the generation of negative ions observed in tourmaline crystals ([YEH, 2006], [WANG, 2004]).

The classic theory for oscillations of the systems with multiple degrees of freedom ([LANDAU, 1971]), in the case of anharmonic vibrations, provides that, over the frequencies of regular oscillations proper of the system, of frequency ωα ..., ωβ, supplementary oscillations superpose, of frequency ωα ± ωβ (among which are the duplicate frequencies and null frequency, the latter corresponding to a constant elongation). The spectrum in the infrared region of the tourmaline reveals oscillations of hydroxyl OH1, in the W site, between 3620 and 3700 cm-1. This gives us an estimation for ωα - ωβ of approximately 2.1012s-1, with wavelength of around 0,1 mm, in the limit range between far infrared and the microwaves. That is, by classic mechanics, it is in fact expected to have an emission by the tourmaline crystals of electromagnetic waves of frequency around 2.103 GHz. However, this is a second order phenomenon and must be of little intensity".

The patents South Korea requested, KR 200306653-A Bioceramic compound; KR 2003398696-B Textile fiber; KR 2004041989-A Production of porous magnetic minerals; 2004098808-A Polypropylene yarn with antibacterial actions; KR 200410796-A Functional insole for shoes; CN 1488807-A Emission of far infrared and negative ions of oxygen; CN 1504147-A Functional ceramic for health; JP 20044238454-A Fan with tourmaline devices to generate anions and eject them into the environment; JP-A 20044242852 Device to remove NOx from vehicular emissions; JP 2004224031-A Ceramic which emits far infrared; JP 2004245206-A Fuel modifier; JP 2004362893 Coaxial cable sheath to improve signal transmission; U.S. 2004197419 Therapeutic treatment and massage; U.S. 2005224126 A1 Coating for water pipe; U.S. 2005284020 A1 Material for breaking xylene clusters in fossil fuel; CN 1564338-A Increase of battery life; KR 2005062480-A Antibacterial brick; BR 9706181-A Soap; 9903343-A Additive for compresses, both use the crystals in their formulation in natural state.

We have verified in Leal's dissertation that clearly all patents are mixtures or ceramic compounds with natural crystal powder, and need a great quantity of basic raw material to work, as for having static effect within a small restricted range they are not irradiated through diffusing vectors. Thus, in order to serve a bigger market, they would need a great quantity of mineral, which is not economically viable for the planet's sustainability.
(LEAL, José Maria. Tecnologia do Pó da Turmalina Negra. 2008. Doctoral Dissertation in Materials Engineering of REDEMAT.)

### Introductory of the Technology

As seen in the Descriptive Report of the invention of the Receiving, Converting and Emitting Battery, resulting from the conjunct action of the mechanically coupled solid hydroresonant and biomagnetic compounds, which form the object of the invention, the Battery produces a new form of energy interaction with the planet, which we named Active Receiving, Converting and Emitting Battery of the Active Magnetohydroresonant Effect. Conversion of the Air/Light Energies, and use of Vital Cosmic Energy (Immanent Energy) and telluric astrophysical energies converted and captured from Neutrinos, (Scientific Publication ArXiv.//arxiv.org/abs/1109.4897^{v2}), by means of the water-based Hydroresonant compound band, mechanically coupled with the Biomagnetic compound band which contains the black tourmaline multi crystals in its composition, complete the Battery. The fact that Black Tourmaline is denominated Magnetite (or magnetic stone) in its etymology and that the water molecules in motion generate energy which many regard as resonant static, justifies the denomination of MAGNETOHYDRORESONANT.

The work of this Active Magnetohydroresonant Effect, which is the sum and interaction of Vital Cosmic Energy, Natural Long-wave Infrared and pulsating and perpetuating, acting through the BATTERY, may be proven as it performs physicochemical changes, in any place of the planet.

Utilizing any communication system, treating generating energy with batteries, we may transmit its signals in electromagnetic waves cherged with negative ions (anions), which may be measured in the reception at any place in the planet. Alternatively, we may apply the battery in the electrical energy of the injection machine during the fusion/injection and by induction of the active Magnetohydroresonant effect, doing the impregnation by negative ions of pulsating and perpetuating cords in natural 15/50 light thermoplastic spheres, which acquire the capacity to permanently emit negative ions (anions), with the capacity to perform the task of breaking water hardness, improving any laundry system.

Another BATTERY prototype was also used, and by means of an inert diffusing vector, the active Magnetohydroresonant effect was irradiated in the sugar cane crop cultivation, throughout the plant cycle until harvest. As a consequence, its juice, after going through the fermentation and distillation process, produced a *cachaça* with the power to reproduce part of the active Magnetohydroresonant effects, that is, able to irradiate and increase the concentration of negative ions (anions) in any environment and to neutralize positive ions (cations) generated by devices that emit non-ionizing radiations, such as a computer or tablet.

Detailed description of the steps and of the processes and obtention of Hydroresonant and Biomagnetic compounds and their solidifications, which form the Battery:

### a. Process of Obtention of Hydroresonant water and solidification:

### The first step:

Of the present invention resides in the process of obtention of Hydroresonant water, composed of drinking water, preferably or preferentially added with 1/3 or 1/12 of rainwater, collected without earthing, utilizing a volume from 57 to 120 liters depending on the ionization of the rainwater (Instrument utilized - Air Ion Counter - 1000 ions/cm³ - ALPHA LAB INC), impregnated with several natural elements such as minerals, dietary elements such as Mg, Na, Ca, S, F among others. This mixture, after the necessary period of batch homogenizing (2 to 12 hours), submitted to a process of open air floating oscillating rotation, with neutral electromagnetic field, forms macromolecules without residue waste into the environment. The impregnated water becomes Hydroresonant, in a new quantic state with electronic network connected to flotation of anomalies of hydrogen between 57 and 65, ["US"] and maintaining the free water molecule frequency in permanent movement. ("Evidence of a new quantum state of nano-confined water". G. F. Reiter, A.I. Kolesnikov, S. J. Paddison, P. M. Platzman, A.P. Moravsky, M. A. Adams, J. Mayers. arXiv).

### The second step:

Of the present invention resides in the process of solidifying the Hydroresonant compound, which is the incorporation of the energies from Hydroresonant water, in the physicochemical form by agglutination technique. In the virgin polypropylene polymer granules, inside a special electromagnetic field with rotation between 12 and 36 vortices by thermal sine waves, with evaporation between 21°C to 210°C, the resulting nano-micros are incorporated into the propylene granules, which permanently maintain the oscillating energy of the natural electromagnetic frequencies of the Earth between 7,83 and 13,5 telluric hertz, (Schumann Resonance), and may vary according to the geodesic point. The propylene granules, with the incorporated technology, have the capacity to extract Vital Cosmic Energy from Air/Light and store it from the neutrinos, which is released together with the negative ions. The propylene granules are injected in HYDRORESONANT strips from Receiving, Converting and Emitting Batteries, to be coupled in the Biomagnetic compound strips.

### b. Description of the invention of the Biomagnetic Compound

### First step:

Of the present invention of the Biomagnetic compound, resides in the process of obtention of the pure and potentialized crystals from black tourmaline powder, which contains innumerous elements in its composition, such as boron, lithium, sodium, iron, aluminum, as well as traces of many other elements. The multicrystals submitted to the processes developed in oven, by means of reductive oxidation, through a process of synthetization and mutation of the potentialized area, with oscillating thermodynamic flotation between 120°C and 750°C, are purified and potentialized 57 to 357 times from its original state. Many of these elements that are undesirable and unnecessary for the proposed function are eliminated in this process.

### Second step:

Of the present invention of the solid Biomagnetic compound, resides in the process of solidification through the junction of the pure and potentialized crystals with the Hydroresonant water. We produce a mixture of the two basic activating components between 1:9 QS and 5:15 QS, a primordial high density hydroresonant soup. The tempered crystals are submitted to an evaporative centrifuge with oscillating temperatures between 21°C and 210°C, submitted to an electromagnetic field in the form of rotation between 12 and 36 vortices, and to an agglutinating technique, with inverse rotations between 1.000 and 8.000 rpm, preferentially between 1.000 and 3.500 rpm. The activators merge in nano-micro tubes inside the virgin polypropylene polymer granules, with all the energy of minerals from the activators, becoming a homogeneous fusion of a stable and secure natural solid final product, capable of maintaining permanent positive and negative poles. The polypropylene granules of the BIOMAGNETIC compound start emitting natural long-wave infrared, Vital Cosmic Energy and negative ions, to be injected in converting battery strips in rectangular, semi-circle, spiral, half-clamp models, with holes and pins, allowing the mechanical coupling with the Hydroresonant compound, which completes the battery.

### Process of preparing and assembling of the RECEIVING, CONVERTING AND EMITTING BATTERY OF THE ACTIVE MAGNETOHYDRORESONANT EFFECT:

The process of invention of the receiving, converting and emitting battery of the active Magnetohydroresonant effect is formed from the reunion of two solid compounds by mechanical coupling. The HYDRORESONANT compound and the BIOMAGNETIC compound are injected by thermo-fusion in a high-pressure injection machine, with a clamp capacity of 120 to 600 tons, injection speed from 15 to 93 kg/cm², preferably in molds containing wells with a capacity higher than 15g of material. The strips may be rectangular, semi-circle, spiral, half-clamp models, with holes and pins that allow the mechanical coupling by pressure of the bands on each other, which forms the BATTERY. The interaction between the energies of the two strips coupled by pins makes the receiving, converting and emitting of the active MAGNETOHYDRORESONANT effect. The new interaction between the energies of the coupled strips extracts the Vital Cosmic Energy from the neutrinos, converts it and permanently emits natural long-wave infrared, Vital Cosmic Energy and negative ions (anions) in the form of oscillating, pulsating and perpetuating cords. The active Magnetohydroresonant effect covers a frequency range that may reach from 0,1m to 100 km, and may cover all the electromagnetic spectrum, thus increasing the range of the electro-optic polarization of the tourmaline, in different spectral ranges of electronic transition bands, reaching the radio frequency spaces from 03 kHz to 300 GHz, and from ≤ 07 kHz to 720 GHz, inverted waves of negative bands, converting the electromagnetic charges loaded with positive ions (cations) into negative ions, gravitons. These negative ions perpetuate in the surrounding environments in any state of energy change and transference within its action range, or are employed in the conversion of the energy that generates these signals, and irradiates though active or inactive diffusors, which may be metal or plastic cables and/or wires, environment air flow, combustion flame flow, among others.

In an active diffusor with electrons or molecules flow, the installed BATTERY acts or irradiates from the point of its installation in the diffusor in the direction of the energy movement or flow, such as energized electric energy conducting cables or wires, radio frequency signals, fuel pipes, running water pipes, combustion air flow, environment air flow, combustion flame flow, people and animals, among others. The Battery applied in inert diffusors acts or irradiates its energy in both directions, in a helical movement with a 6m diameter along the diffusor, producing a healthy pre-electronic environment.

In Geobiology, there are cracks, fissures, underground fault lines, underground water circulation, buried water pipes or power lines, which alter the constant electrostatics, or electro-atmospheric potential and electric potential. Also, the emanation of radon gas from the underground with ionizing atmospheric effects and whose destructive and noxious power has been completely demonstrated, telluric radiations, or electric differentials which may be measured by electronic instruments, such as magnetometers, Geiger counters, galvanometers, piezoelectric sensors, and all other anomalies originating from the underground are able to induce and fall upon the balance of the living beings. The Battery, if applied over the underground anomaly or utilizing metallic diffusors, neutralizes telluric radiations, eliminates the electric differential, eliminates the insalubrity caused by such anomalies, recreating a healthy environment, capable of reestablishing the balance of living beings that grow over these places.
(CNPq Project 558358/2009-8; - Bueno, Mariano, O grande livro da casa saudável/Mariano Bueno;l tradução de José Luiz da Silva I - São Paulo: Roca, 1995. - La influencia Del lugar sobre La vida, Prof. K. E. Lotz [Postfach 1641, D 7950 Bibberach/Riss, Germany].)
1 - Example of the production of a basic rectangular BATTERY: both bands in the rectangular form, with an 8cm length, 3cm width and 0,6cm thickness, with a mass of 15g, through mechanical coupling using pins, form the battery with a mass of 30g.
   The battery constructed this way acquires the capacity to extract energy from the natural light of the environment, permanently, emitting natural long-wave infrared, Vital Cosmic Energy and negative ions, and also acquires the capacity to treat electrical systems which emit electromagnetic radiation, the positive ions (cations), performing the conversion of these positive ions (cations) in the generating source into negative ions (anions). From this moment the electrical system starts emitting negative ions throughout the network and the electro-electronic equipment installed, revitalizing and promoting salubrity to the environments, harmonizing and synchronizing all the system, that is: the charge installed in the electrical energy supplied to a household, synchronized and harmonized, presents a reduction of 5% to 15% in consumption, a better reproduction of audio and video by the sound system and TV, eliminates vibration and noise and adds service life to the appliances.
2 - Example: The battery with a mass of 30g has the capacity to serve a household which presents a monthly consumption of up to 250 kWh. For higher consumptions, we must group in series, by diffusing vectors in a quantity which is directly proportional to the 250 kWh, used as reference. From the Battery application point on, all the wires and electro-electronic equipment start emitting natural long-wave infrared, vital cosmic energy and negative ions (anions) into the environment. The anions are considered as "vitamin in the air", as they clean the polluted air which contains dust and other particles, neutralizing the ones which have positive charge (cations). The anions also activate the β-endorphins in the human brain, which provides more stability, comfort and happiness, reducing stress. They also activate human metabolism, stabilizing the autonomic, sympathetic and parasympathetic nervous systems. Furthermore, they eliminate the generation of active oxygen and the oxidation of body fluids in the human blood, thus making it healthier, besides increasing the levels of gamma globulin in the blood, which helps the body fight against pathogenic organisms. Thus, all assisted environments become decontaminated and healthy.
3 - Example: a monthly consumption of 5.000 kW/h will need the employment of 5.000/250, which means 20 basic batteries of 30g. Alternatively, we can inject strips with a greater individual capacity, and produce more powerful batteries.
   The invention of the Battery belongs to the mineral physicochemical energy sector. After the Hydroresonant and Biomagnetic compounds are injected in a strip and coupled in batteries, they have their energies added, and the Biomagnetic one maintains permanent positive and negative poles in its strip. Under pressure, the multicrystals activate the ionic piezoelectric properties, and the pyroelectricity or electrical potential is increased. The electrode of the band is potentially capable of interfering in the electromagnetic waves, becoming a powerful transducer. As it potentializes negative ions with polarization of the light, it performs electronic absorption in special spectra ranges, activated by the Hydroresonant strip, which generates the active Magnetohydroresonant effect. The battery then produces and emits natural long-wave infrared, receives and emits vital cosmic energy and negative ions, with the capacity to cover all the electromagnetic spectrum, thus increasing the range of the electro-optic polarization of the tourmaline, in different spectral ranges of electronic transition bands, reaching the radio frequency spaces from 03 kHz to 300 GHz, and from ≤ 07 kHz to 720 GHz, in frequencies of negative bands. They may irradiate this energy through wires, diffusing cables, consumption/irrigation water, combustion air, electrical energy, communication systems, that is, this highly innovative technology is capable of dynamizing resources, with small quantic mass in the form of converting batteries, working in any part of the planet.
4 - Example: In the case of transmissions of radio signals, TV, cell phones, GPS, internet and satellite, if the Magnetohydroresonant Battery is applied in the energy which feeds the generating source, the signals generated by the transmitter, in the form of electromagnetic radiation, starts transporting negative ions (anions) charge. Then, wherever the signal is captured, the receptor will distribute negative ions (anions) to the environment, making it healthy, with vitaminized air in resonant frequencies between 7,83 and 13,5 telluric hertz, the same which flows in all healthy living beings in the planet.

The active Magnetohydroresonant effect technology, in the form of a battery, is fed by the natural ambient light energy which, externally applied to the treated object, transfers its priorities in the assisted production line, impregnating or allocating itself in the obtained or treated products.

The active Magnetohydroresonant effect technology is an energy field which works in the electromagnetic conversion levels, from positive ions to negative ions, with the capacity to extract astrophysical energy from Air/Light, attaching it to be used in physicochemical activities with hydrogen. Hydrogen, then, will transmute its atomic structure, in which the active effect will be applied and maintained in synchrony of cords in perpetual pulsation of negative ions, constructive of life of the mineral, plant and animal kingdoms. In such conditions, hydrogen acts especially in combustion systems.

### Current Situation of Reserves, and the Use of Fossil and Renewable Fuels

The burning of coal, of fossil fuels and industrial pollutants release sulfur dioxide (SO₂) and nitrogen dioxide (NO₂) in the atmosphere. The referred gases combine with hydrogen present in the atmosphere in the form of water vapor, resulting in acid rains. Rainwaters, just like hoar, snow and fog, are loaded with sulfuric acid or nitric acid. As they fall on the surface, they alter the chemical composition of the soil and waters, impact food chains, destroy forests and plantations, attack metallic structures, monuments and buildings. Ph measures the index of positive ions of hydrogen in a solution, and the table goes from zero to fourteen: the higher the concentration of those ions, the smaller the Ph will be and, therefore, the more acid the rain. In several cities in Western Europe and Eastern USA, the rain reached a Ph between 2 and 3, that is, between vinegar and lemon juice.

The pollution that comes out of the chimneys and vehicular exhaust systems is taken by the wind, traveling kilometers, and part of it may remain in the air for weeks, before settling on the soil; and the longer pollution stays in the atmosphere, the more its chemical composition is altered, being transformed into a complex polluting cocktail. According to the World Wide Fund for Nature, nearly 35% of the European ecosystems have already been seriously altered and around 50% of the forests in Germany and the Netherlands have been destroyed by the acidity of rain. In the North Atlantic coast, seawater is 10% to 30% more acid than in the last 20 years. Around 3 million tons of acid pollutants are taken from the United States to Canada each year. Half of all sulfur dioxide (SO₂) precipitated in the Canadian east comes from the industrial regions located in the northeast of the USA. In the USA, where the thermoelectric plants are responsible for almost 65% of the sulfur dioxide released into the atmosphere, the soil in the Appalachian Mountains is also altered: it presents ten times the acidity of the lower neighboring areas, and a hundred times the acidity of the regions where this kind of pollution is not present. In South America, rains with an average Ph of 4,7 have been registered both in urban and industrialized centers and in remote regions. In Cubatão, São Paulo, acid rains contribute to the destruction of the Atlantic Forest, and to landslides. The thermoelectric plant of Candiota, in Bagé, Rio Grande do Sul, causes the formation of acid rains in Uruguay. Acid rain also affects human health, releasing toxic metals that were in the soil, which may reach rivers and lakes that may be the most damaged, as they may become totally acidified, losing all their life. Nowadays, coal, oil and natural gas are utilized to supply 75% of energy consumption. Diesel-fueled vehicles produce 40% of the particulate matter in the atmosphere. According to specialists, diesel technology in Brazil is undeveloped, a Brazilian bus pollutes until 15 times more than the ones in Europe and the USA. A study in USP also points out that 298 hospitalizations for problems caused by pollution of diesel, mainly of particulate matter, have been avoided. Pollution aggravates diseases such as asthma and pneumonia. Around 4.000 people die every year as a consequence of air pollution in São Paulo, more than AIDS and tuberculosis together. It affects babies, pregnant women, asthmatic people, says Doctor Paulo Saldiva, coordinator of the Experimental Atmospheric Pollution Laboratory of the Medical School of USP.

The Industrial Revolution, started in Europe in the 18^{th} century, caused the exhumation of the coal buried millions of years before, in gigantic proportions, with the aim of powering the recently invented steam machines. Today, 52% of all electrical energy consumed in the USA is originated from the burning of mineral coal, and it happens in similar or even bigger proportions in China, Russia and Germany, being the reserve of this fuel estimated for more 400 years.

The Exame.com magazine published on November 20^{th} 2011, in the Environment and Economy section, that the year 2010 had the highest peak ever registered in greenhouse gas (GHG) emissions. The increase, measured in emissions of CO₂ released into the atmosphere resulting from the burning of coal and gas, reached around 6% between 2009 and 2010. The volume of greenhouse gases which cause global warming, released in the atmosphere, extraordinarily increased in 2010, according to the last world data about emissions of CO₂, compiled by the US Department of Energy (DOE). In December 2009, the Copenhagen established the goals for the combat to global warming, as world leaders present in the United Nations Climate Change Conference established the goal of limiting global warming to 2° Celsius above the pre-industrial levels, which will demand a reduction in carbon emissions in more than 8% until 2020, in comparison with the 2010 levels. In the scenarios which consider a "probability" over 66% that the temperature on Earth remains under these 2°, global emissions would have their peak between 2010 and 2020. In 2020, annual emissions would have to be of 44 billion tons (or gigatons) of carbon dioxide or equivalent carbon (CO₂) per year. This volume would represent a reduction of 8,5% in relation to 2010, when global emissions were of 48 gigatons. The emissions would have to continue to decline after that.

According to the International Energy Agency (IEA), in 2010 the exclusive emissions of CO₂ were the greatest in history, strongly increasing after a sharp drop in 2009, attributed to the international financial crisis. On the other hand, scientists remain cautious regarding the 2°C goal, affirming that it is not a guarantee of safety and, leaded by Joeri Rogelj, from the Institute for Atmospheric and Climate Science in Zurich, Switzerland, they revised computer models based on the 2°C goal. Many of them say that it is already possible to notice visible changes in snow and ice cap, in the habitat and reproductive patterns of migrating species due to an already observable warming, of approximately 1°C since 1900. "If the necessary mechanisms to enable a precocious peak of global emissions, followed by intense reductions are not implemented, there is a significant risk that the 2°C goal may not be reached", scholars alert.

In Brazil, companies propose ways for low carbon economy, proposing investment in research and development, public incentives and use of more efficient technologies in the industry, to reduce emission of greenhouse gases (GHG) and propel the economy.

### Use and mode of action of the Battery in Combustion systems

The use of the Magnetohydroresonant technology, in the form of Battery in any combustion system, extracts astrophysical energies from the Air/Light, attaching it to be used in physicochemical activities with hydrogen. Hydrogen, then, will transmute its atomic structure, a natural additive, and activate an energy field which works in the electromagnetic conversion of positive ions (cations) into negative ions (anions), will be applied in combustion and maintained in synchrony of cords in perpetual pulsation and produces light materialization, maintaining a randomizing connector electromagnetic space-time warp (black hole) and refocusing the totality of energy. The new hyper-dimensional orbital camp permanently neutralizes the combination of elements which compose combustion, reduces the emission by 35% to 60% of the resultant gases, such as HC, CO, CO₂, NO₂, NOx, SO₂, O₃, MP, smoke, and other gases such as benzene and dioxins, harmful to the biosphere, and reduces consumption by 5% to 15%.

### The use of Magnetohydroresonant technology in fuels

The use of the Magnetohydroresonant technology, in the form of Battery in combustion system of rotational and reciprocating motions of the Otto, Diesel and Braytone Cycles, as well as in controlled external combustion systems, cooking systems among others, is defined by the characteristics of each kind of system:
1 - Otto Cycle. In Otto cycle engines with capacity of up to 2.0 L, two batteries are applied, one in the air filter inlet and the other in the fuel pipe, which also connects to the positive terminal cable of the battery, by means of a plastic or metal inert diffusing vector. For more powerful engines, one battery is added for each 50 CV;
2 - Diesel Cycle. In Diesel cycle engines with potency of up to 50 CV, two batteries are applied, one in the air filter inlet and the other in the fuel pipe. For more powerful engines, one battery is added for each 50 CV, in the air filter outlet in a 3:1 proportion, that is, for every 3 batteries applied in the air filter outlet, one battery should be added in the fuel system;
3 - Still in the Diesel cycle, the use of the Magnetohydroresonant technology and/or the use of triple action, that is, using one battery to ionize drinking water to be applied in the exhaust, may anticipate Proconve 7, as our country does not currently possess technological conditions to refine diesel for S50 (concentration of 50ppm of sulfur). More than 5 billion Reals are being invested on REFAP - Canoas - RS, to start producing S50 in 2013, which will not meet the demanded reductions of CO %, CO₂ %, NOx %, SOx % and MP by CONAMA. The use of the Magnetohydroresonant technology in the form of a battery applied in pre-combustion systems, air and fuel filters, presents results which surpass 30% of CO %, CO₂ %, NOx %, SOx % and MP defined by the current norms of CONAMA, presented by experiments obtained with a battery prototype performed in laboratories accredited by Inmetro. With triple application of the technology, that is, the installation of the battery in the post-combustion system, we may reach the EURO V index, in the vehicles that currently circulate in our cities every day, without changing the fuel. By injecting ionized water by controlled pressure in the gases resulting from combustion utilizing a special BRSPK type catalyst, under experimental development, with leaching of the particles, it is predicted to release water vapor and hydrogen to the atmosphere, with a considerable reduction of particulates, without the need to change the current refinery and distribution structure.
4 - In cooking combustion systems, whether in industrial or home stoves, the batteries are applied in the form of clamps, directly to the hoses or pipes which conduct the gas until the burners around 30cm before the stove or oven. We have performed experimental tests with prototypes of the battery is the form of clamps with 15 grams of mass, in home stoves with 4 to 6 burners, and the reduction in consumption was higher than 15%. This is attributed to the fact that the battery was placed very near the stove and to the slow flow, so that the gas keeps receiving the Magnetohydroresonant active ingredient, and the water utilized for cooking also increases conductivity and boils with a lower temperature.

### Special Chapter - External Combustion Systems

The use of the Magnetohydroresonant technology, applied in the form of Battery in these external combustion systems which use many varieties of fuels, requires a special dissertation that follows:
1 - In external combustion systems which use Natural Gas (NG) as fuel, such as boilers, drying ovens, calcination ovens, drying chambers, heating systems among others, a combined application is conducted in the combustion air outlet. The Batteries are applied in the form of Hollow Curtain, and the number of units depends on the flow in cubic meters of comburent air consumed per hour, and around the gas conducting pipe in the proportion of one for each 20.000 kcal/h. It reduces the consumption by 5% to 12%, and the emission of pollutants, of greenhouse gases - GHG by over 60%. In the specific case of boilers, through the treated combustion flame, the active Magnetohydroresonant effect impregnates in the vapor generating pipes, reduces water hardness, dissolves salts and reduces clogging and clingage problems.
2 - In external combustion systems which use Heavy Oils APF, BPE, BTE, OC4 and Diesel as fuels, such as boilers, drying ovens, calcination ovens, drying chambers, heating systems among others, a combined application is conducted in the combustion air outlet. The Batteries are applied in the form of Hollow Curtain, the number of units depending on the flow in m³ of comburent air per hour. Batteries are also externally applied, around the oil conducting pipe in the proportion of one for each 10.000 kcal/h. This reduces consumption by 5% to 12% and the emission of pollutants, of greenhouse gases - GHG, such as CO, CO2, NOₓ, SOₓ, smoke, dioxins and other resulting gases by over 35%. In the specific case of boilers, through the external combustion flame, the active Magnetohydroresonant effect impregnates in the vapor generating pipes, reduces water hardness, dissolves salts and reduces clogging and clingage problems.
3 - In external combustion systems which use Pet Coke or Coke as fuel, such as boilers, drying ovens, calcination ovens, ceramic atomizers, drying chambers, heating systems among others, one application is done in the combustion air outlet. The Batteries are applied in the form of Hollow Curtain, the number of units depending on the flow in m³ of comburent air per hour. Batteries are also externally applied, around the oil conducting pipe in the proportion of one for each 10.000 kcal/h. This reduces consumption by 5% to 12% and the emission of greenhouse gases - GHG, such as CO, CO2, NOₓ, SOₓ, MP, smoke, and other resulting gases by over 45%. In the specific case of boilers, through the treated combustion flame, the active Magnetohydroresonant effect impregnates in the vapor generating pipes, reduces water hardness, dissolves salts and reduces clogging and clingage problems. Also, in the specific case of ceramic atomizers, it reduces the incidence of stains in treated tiles and porcelains, increasing their resistance.
4 - In external combustion systems which use biomasses, pomace, wood chips, fruit peels, fruit seeds, firewood and others as fuel, such as boilers, drying ovens, calcination ovens, cereal drying chambers, heating systems among others, the application is conducted in the combustion air outlet. The Batteries are applied in the form of Hollow Curtain, the number of units depending on the flow in m³ of comburent air consumed per hour. Batteries are also externally applied, around the oil conducting pipe in the proportion of one for each 10.000 kcal/h. This reduces consumption by 5% to 10% and the emission of greenhouse gases - GHG, such as CO, CO2, NOₓ, SOₓ, MP, smoke, and other resulting gases by over 60%. In the specific case of boilers, through the treated combustion flame, the active Magnetohydroresonant effect impregnates in the vapor generating pipes, reduces water hardness, dissolves salts and reduces clogging and clingage problems. Also, in the specific case of cereal drying chambers, it maintains the quality and aggregates vitality to them. In the case of Mineral Coal, the resulting fine ashes contain low levels of contaminating material, and may be employed in the blocks industry or used to increase the quality of cement.
5 - In external combustion systems which use mineral and vegetal coal as fuel, such as boilers, steel mill ovens, calcination ovens, heating systems among others, the application is conducted in the combustion air outlet. The Batteries are applied in the form of Hollow Curtain, the number of units depending on the flow in m³ of comburent air consumed per hour. Batteries are also externally applied, around the oil conducting pipe in the proportion of one for each 10.000 kcal/h. This reduces consumption by 5% to 10% and the emission of greenhouse gases - GHG, such as CO, CO2, NOₓ, SOₓ, MP, smoke, and other resulting gases by over 45%. In the specific case of boilers, through the treated combustion flame, the active Magnetohydroresonant effect impregnates in the vapor generating pipes, reduces water hardness, dissolves salts and reduces clogging and clingage problems. The resulting fine ashes contain low levels of contaminating material, and may be employed in the blocks industry or used to increase the quality of cement.

Example A: Here we present an example of the use of a technology prototype, applied in the comburent air of a furnace, 3 basic units of Magnetohydroresonant batteries, in the form of Hollow Curtain. Evaluated fuel: ground mineral coal in chips. The measurement was carried out using the electronic meter TEMPEST 100 U3.3.

The 1^{st} reading: in the chimney, on Aug 17^{th} 2011, at 5:42:00, room temperature of 22°C, chimney temperature of 439°C. Without the Magnetohydroresonant technology, we obtained the following reading from the Tempest 100 meter: (CO ppm = 441), (CO₂ % = 7.3), (NO ppm = 15), (NOx ppm = 16) and (SO₂ ppm = 130).

The 2^{nd} reading: with the Magnetohydroresonant technology, applied in the form of Hollow Curtain, composed by 3 batteries, installed in the comburent air inlet of the oven, at 5:46:22, room temperature of 22°C, chimney temperature of 386 °C, we obtained the following reading from the Tempest 100 meter: (CO ppm = 369) against 441 on the 1^{st} reading, (CO₂ % 6.2) against 7.3 on the 1^{st} reading, (NO ppm = 2) against 15 on the 1^{st} reading, (NOx ppm = 2) against 16 on the 1^{st} reading e (SO₂ ppm = 18) against 130 on the 1^{st} reading. This demonstrates the technology's efficiency in the reduction of greenhouse gases - GHG - in combustion processes, as previously described. Due to the action of the active Magnetohydroresonant effect technology, the ashes or solid waste from the combustion of solid fuels such as mineral or vegetal coal, firewood, cereal husks, wood powder, tree barks or pellets, results in ashes with lower levels of SO₂ and NOₓ in their composition, which may be utilized in civil construction or in the cement industry, produces a higher quality cement, compared to other agglutinants. If the battery is applied in electric energy and water utilized in the production of beams or pre-molded pieces, their resistance is increased by 1 N (Newton), and the water absorption is reduced by over 10%.

In the use of Magnetohydroresonant technology, the Batteries may be applied in a combined way, in pipes for the supply of solid, liquid and gas fuels for ovens, internal combustion engines and propulsion turbines, utilized in land, sea and air vehicular systems, on the pre-combustion phase, contributing to the increase of efficient burning capacity, to the reduction in consumption by 5% to 15%, and to the reduction of gas emission from 35% to approximately 60%, which generate carbon cred its.

Example B: Several experiments concerning the use of Magnetohydroresonant technology have been conducted, with prototypes applied in light vehicles with Otto cycle engines between 1.0 and 2.0L, whose combustion systems involve three factors: combustion air, fuel, and ignition. Two batteries were applied, one in the fuel system, and another in the air outlet, and an inert diffusing vector was connected to the positive cable of the battery. The air/fuel mixture and ignition treated with natural long-wave infrared, Vital Cosmic Energy and negative ions in the form of pulsating and perpetuating cords, produced an efficient burning, with an economy between 8% and 12%, and average reduction of gas emission by over 50%. The gases measured by the Vehicle Inspection Center were CO, CO₂ and HC. It also reduced smoke and smell, with the inversion of the electric charge of the resulting gases. After the application of the Batteries, the gases started to be emitted charged with negative ions (anions), which are beneficial for the environment.

Tests conducted in the LAMCO Laboratory - Unijui - Panambi - RS; Simocar Inspeção Veicular Ltda. CNPJ 08.225436/002-71.

### Current Situation of Electrical Energy Supply and Utilization

We live in a society which is completely dependent on electricity and on electric appliances such as light bulbs, showers, microwaves, fridges, sound systems computers, ATMs, credit cards, and in the factories, machines, equipment and engines commanded by sophisticated automation systems and electric controls. Communication systems, such as radio broadcasting, TV, home/mobile telephony, which aggregate comfort, safety and agility, interconnected to the electrical network, are also dependent on electricity.

However, there is a sacrifice, a bill to be paid, by the electricity generation, transmission and distribution system, the electrical energy suppliers. Electricity is shared with the users, which is considered bad use of electrical energy, represented by reactive power, generated by equipment such as badly dimensioned engines, welding machines, transformers, among others. Reactive power does not produce work, but it is necessary to produce magnetic flow for the functioning of these pieces of equipment, occupying space in the system, which could be used by active power.

The Supplier has the right to charge for this "inefficiency" from the consumers in the form of a fee, and its value is established by the relation between active and reactive power. This must be between 0 and 1, which is called Power Factor (PF), whose procedure is regulated by Resolution 456 of the Brazilian Electricity Regulatory Agency (Aneel), of November 29^{th} 2000, which establishes an PF equal or greater than 0,92. This problem is solved with the installation of a capacitor bank in the network, but this solution is only partial, due to the constant variation of equipment use, as they consume energy to operate and for periodic maintenance, thus varying the charge gauged by the bank, bringing the PF into a fee condition. Abinee - Brazilian Electrical and Electronics Industry Association - requested Aneel to include the correction of the power factor to 0,95 for low voltage consumers, and this increase would represent a 3,25% gain in electrical energy distribution and transmission capacity of the country. According to the entity, the gains are equivalent to the ones brought by daylight savings time every year. The use of electronic meters shows the percentage of reactive power produced, although it detains high-end technology and, within the cost-benefit relation of the distributors, it is only installed in great consumers of energy due to its high cost.

Another villain of the current energy generation, transmission and distribution systems, are the harmonics, a phenomenon which tends to aggravate. They create disturbances and are generated by the circuits of consumers' electronic devices such as radios, TVs, microwaves, computers, fridges, sound systems, electric welding machines, among others, and may provoke some kind of failure to the electric installation in which it is present or to its components. The harmonic frequencies originate several kinds of disturbances and may cause serious problems to the functioning of a computer network, for example. High harmonic frequencies may cause irradiated or conducted electromagnetic interferences which, in turn, provoke vibrations in electric panel boxes, transformers and/or coupling in communication networks, and may jeopardize the quality of voice, image and data channels.

The harmonics also generate unpleasant noises or heating by Joule effect in the conductors, components and equipment in the Energy Supplier system, as well as in the consumers' conductors, components, machines and equipment, reducing the service life of this installed electric infra-structure, both for the supplier and the consumers. The presence of voltage harmonics increases mistakes in data transmission, reduces the speed of communication and, in the industry, it induces current harmonics in the rotors of electric engines, which produces pulsating binaries responsible for vibration in the machines. The effects of voltage harmonics on the pieces of equipment that use the network as synchronism signal, such as the soft starters, for instance, lead to disturbances that often originate the system reset. The electrical energy system as a whole still has a few bills to be paid, that is: the Supplier with its conductors, components and equipment, and the consumers with their conductors, components, machines and equipment are emitting sources of positive ions which are harmful to life, causing a series of disturbances in the atmosphere and the environment, with a negative impact on plants, animals and man.

### The Use of the Magnetohydroresonant Battery Technological Innovation in Electrical Energy

In the use of Magnetohydroresonant technology in electrical energy, the Batteries are applied without physical contact with the conductive metals, executed as follows: 1 - The battery is fixed in the electrical energy cables which feed the system; 2 - The battery may also be fixed in the external part of the lid of the electrical distribution panel box of the system, and the battery starts converting the electromagnetic emitter field of positive ions (cations) of the installation into negative ions (anions), diffusing it throughout the electric circuit of the installation. This results in harmonization and synchronization of the system as a whole, reduces the generation and the effect of harmonics, reduces noise, vibrations, energy losses, Joule effect, extends the service life of the Supplier and consumers' components, machines and electric equipment, and also promotes a reduction in active and reactive power consumption by 5% to 15%.

### Scientific Study with the Battery Prototype

The use of Magnetohydroresonant technology in electrical energy becomes evident with the employment of a Battery prototype, used in a Technical-Scientific work by UNIJUI/RS - SOLDAGEM MIG and MAG AUTOMÁTICO.

Abstract: "The present work aims to evaluate the functioning of a device, whose goal is to reduce the emissions of smoke and gases which are harmful to the workers' lives. In the case of the process conducted in the MIG/MAG welding machine, the prototype presented positive results, managing to reduce by 60,5% the polluting gases. Such reduction in the quantity of polluting gases favors the occupational health of any welding machine operator, as well as of the entire environment around workplaces. "Other benefits, such as higher weld bead penetration, Vickers hardness, resistance to traction, smaller quantity of welding spatter with fuller utilization of the electrode wire, only occur due to the electrical energy correction, with the inversion of positive ions into negative ions".

### [UNIJUI] Project

Development of an Innovative Product for the Reduction of the Emission of Pollutants in Welding Processes, with an Increase in Energetic Efficiency and Improvement in the Quality of Welding Beads; Prof. Dr. Gil Eduardo Guimarães.

### Current Situation of Communication Systems

All communication systems, from the generation, transmission and relay stations of radio broadcast signals, television systems and microwave transmission systems to cell phones, internet, satellite and other forms, use electrical energy for their signal generation. In all the electromagnetic spectra, they suffer the consequences of the electric harmonics and are productive sources of positive ions (cations), as these electromagnetic waves are charged with positive ions (cations), non-ionizing space radiations. These radiations start circulating all around the biosphere, fed by these systems, reaching all places in the planet. With their noxious effects, they alter, modify, disturb, disintegrate and destroy all land, river, lake and sea flora and fauna (such as the bees Colony Collapse Disorder - CCD), acidifying soils, rivers, lakes and sea, melting glaciers, potentializing greenhouse gases resulting from combustion, contributing to the destruction of the ozone layer, disseminating all over the planet according to the wind currents.

Recent research conducted by Daniel Frave, from the Swiss Federal Institute of Technology, about the Colony Collapse Disorder - CCD guarantees that electromagnetic signals bring consequences to the insect. Cell phones might be confusing or even killing the bees around the world. A study reveals that, after 20 hours of exposure to these signals, the bees emit a sound to abandon the house. For the experiment, Favre recorded the sounds of bees exposed to electromagnetic signals emitted by cell phones and observed the production of sounds similar to the ones the bees produce when they abandon the beehive. According to the researcher, previous studies showed that the prolonged exposure to cell phones made the bees fail to find their way back to the beehive, leaving it practically empty in 5 to 10 days.

It is not known if Einstein's famous quotation, affirming that man would not resist more than four years to the disappearance of the bees is authentic. But specialists are unanimous in foreseeing that the end of bee swarms would have catastrophic effects for humanity, seriously reverberating on the agricultural production due to the lack of pollination of the flowers. Today, humanity is traveling down this path. We live in the global communication era; our biosphere is an ocean of electromagnetic radiations and communication systems in all frequency bands, so that some cell phone frequency bands in the big urban centers are already saturated, and to expand them, it would be necessary to use even frequency bands which are even higher and more destructive to life.

The use of cell phones is supposed to kill more than cigarettes in a few years, according to a study by an Australian doctor released on the internet. Vini Khurana, a neurosurgeon who has received 14 awards in 16 years, asks the population to use the appliance as little as possible, especially when it regards children. The doctor analyzed nearly a hundred scientific works published about the theme to draw his conclusions. According to him, there are at least eight clinical studies which indicate a connecting between the use of cell phones and certain kinds of brain tumor: "There are already predictions that this danger has more implications for public health than amianthus exposure or smoking".

Cell phones may cause cancer, as stated in a study carried out in London, on August 30^{th} 2007. The exposure to mobile telephony signals during only five years might stimulate a cell division process, according to a new study about the use of the device, published in the last issue of the "New Scientist" magazine.

This process occurs naturally in the growth or rejuvenation of human tissue, but it also occupies a central role in the development of a cancer. A team led by Professor Rony Seger, researcher from the Weizmann Institute of Science, in Rehovot, Israel, exposed human cells and rat cells to electromagnetic radiation with a frequency which is similar to the one emitted by cell phones, but reduced to one tenth of its power. After only five minutes, the researchers identified the production of kinases (a kind of enzyme), regulated by extracellular signals (ERK1/2), natural chemical substances which stimulate cellular division and growth. "The actual importance of our invention is that the cells are not immune to cell phone radiation, although they are not exposed to a temperature increase", says Professor Seger, quoted today by the "Daily Telegraph" newspaper.

Someone who lives within a distance of up to 100 m from a cell phone antenna presents 33% more risk of dying of cancer than the general population, according to a research by the Federal University of Minas Gerais.

The 52-year-old engineer Adilza Condessa Dode crossed the data about deaths by tumors between 1996 and 2006 in Belo Horizonte, with the areas where these people lived and the location of cell phone antennas. She elected tumors already associated to this kind of radiation: prostate, breast, lung, intestines, skin and thyroid tumors, within a range of up to one thousand meters from the antennas. The risk was higher. You turn off your phone, but not the antenna.

Enginer Álvaro Augusto Salles, professor of telecommunications in the Federal University of Rio Grande do Sul, created a model of the brain based on the tomography of a child, to simulate the effects of radiation. He explains that the waves have thermal effects (that is why the ear gets warm when you use the cell phone) and non-thermal effects. These may cause breaks in the strands which form DNA double helix, leading to mutations and tumors. The risks are higher in children, whose tissues are reproducing more quickly. Salles says that, when we use the cell phone close to the ear, 75% of the energy which would be used in the connection is absorbed by the head.

### The problem is already known. However, it is underestimated and poorly divulged

To have an idea of the seriousness of the situation, researches conducted in Israel (which is a top country in research in this area) by the Weizmann Institute of Science and published in the New Scientist website conclude that the exposure to mobile telephony signals for only five minutes might stimulate a cell division process. This process occurs naturally in the growth or rejuvenation of human tissue, but it also occupies a central role in the development of a malignant tumor. A team led by Professor Rony Seger, researcher from the Weizmann Institute of Science, in Rehovot, Israel, exposed human cells and rat cells to electromagnetic radiation with a frequency which is similar to the one emitted by cell phones, but reduced to one tenth of its power. After five minutes, the researchers identified the production of kinases (a kind of enzyme), regulated by extracellular signals (ERK1/2), natural chemical substances which stimulate cellular division and growth.

The solution, patented by Brazilian researchers Eng. Prof. Dr. Luciano Vieira Lima and Msc. Sandra F.O. Lima is an application of the principles proposed by Michael Faraday in 1836, named Faraday Shield. This device proposes to avoid magnetic interferences in regions of pieces of equipment that could not suffer influence from magnetic fields.

This is the crucial point that needs to be solved, to block the radiation emanated by cell phones, in order to stop such electromagnetic radiations which are noxious to the human body from causing damages to it when some communication is established.

The big problem is that the Faraday Shield principle utilized, for instance, in the microwave ovens, has the function of blocking all the radiation. In the specific case of cell phones it would not be functional, as once the radiation is blocked, the device would not be able to receive and/or transmit signals, totally compromising the functionality of the cell phone device. Several tests were conducted during some years, until, in the end, project coordinator, Eng. Prof. Dr. Luciano Vieira Lima, Msc. Sandra F.O. Lima, and researcher Msc. Hélcio Camargo Jr from KN CENTER Ltda. Concluded the research and developed a unique product in the world market, which is a protective armor against radiation produced by cell phone equipment and the kind.

The April 14^{th}, 2011 issue of Correio do Povo website highlights the commitment by the Minister of Communications to work for the strengthening of AM radio broadcasters, which are jeopardized due to the noise of household appliances and the high-voltage lines. "It is not fair to let the radios dwindle due to technical problems", he highlighted. One of the alternatives suggested by the Brazilian Agency of Telecommunications (Anatel) is the relocation to another frequency range, which would need high investments by the broadcasters. According to the president of Agert, this would be the most feasible measure to modernize the sector. "We urgently need to find a way for AM radio to recover its strength and become more competitive", said Gadret, also pointing out the social and community role of commercial radio stations. "In emergency cases, of public interest, of great catastrophes, the commercial radios are essential in the rendering of services, specially highlighting the National Broadband Plan and the Regulatory Framework, concluded Gadret.

### The Use of the Magnetohydroresonant Battery Technological Innovation in Communications

The use of Magnetohydroresonant technology in communications, one may proceed in two or three ways: 1 - The battery is fixed in the electrical energy cables which feed the system; 2 - The battery is fixed in the external part of the lid of the electrical distribution panel box of the system. The same procedure is executed in other energy sources that feed the converting system, generator of signals of radio broadcast, audio, video, image, data, internet, cell phone telephony system, GPS and satellites, in any range and band or inverse band, which use electromagnetic waves to propagate. These are converted in the electric source of positive ions (cations) into negative ions (anions), signals which are transmitted and received in negative ions, in the form of pulsating and perpetuating cords. The appliances connected in a system treated in the generation source, such as radios, TV sets, cell phones and internet do not affect the biology of the users who are connected in this system.

All these charges are already converted in its generation origin, in transmission, relay stations and receptors, which harmonizes and synchronizes all the treated system. When the transmission and retransmission occur through Aether, they load the biosphere with negative ions, which act on the greenhouse gases - GHG, positive ions (cations), reducing the action of these gases which used to generate acid rains with negative impacts on life, the environment and economy, converting them into negative ions (anions). Thus, the ozone layer and the pre-electronic natural environment are reestablished, harmonizing plant and animal life, mainly of the insects and in special of the bees, which will have their guidance and communication systems preserved, which avoids the foreseen collapse and enables their recovery.

Whether the transmission system and relay stations happen through Aether or cable, the same effect which occurs in the atmosphere will occur in human leisure and occupational environments, such as residential, commercial and industrial environments, among others. The reception points of these signals in radio, TV, cell phones, internet or GPS devices, now with electromagnetic fields which emit negative ions, vitalize these environments, promotes well-being and disposition for people. As far as cell phones are concerned, it eliminates the noxious effect that their constant use provokes in people and the ecosystem through the microwaves range it operates.

The action of the Magnetohydroresonant battery technology installed in communication systems aggregates benefits, saving energy and service life of the devices, as it eliminates harmonics, noises and vibrations of the equipment, improves the quality of signals of audio, data, image and internet since the generation, transmission, reception and retransmission in relay stations. It also improves the quality and broadens the reach of signals of audio, image and data, thus reducing the radio, television and cell phone shadow zones, as it harmonizes and synchronizes the entire system.

### Electromagnetic Radiations and their Effects on Man under Prolonged Exposure

Human beings, when constantly submitted to the non-ionizing radiation (NIR) fields, such as the previously described welders, computers, radar systems, and telemarketing operators, automation systems, radio broadcasting, television systems and satellite controllers, airplane pilots, astronauts, drivers, electricians, as well as users of devices with artificial electromagnetic principles, feel tired and have reasoning difficulties. Many of them also go into depression states by the evident stress, the RSI and WRMD problems are constant, they also experience partial memory loss (brief blackouts), dry eyes (Computer Vision Syndrome - CVS), headaches, insomnia, dizziness, besides respiratory and digestive problems.

### The Use of the Magnetohydroresonant Technology, in the Form of Battery, in the Conversion of Electromagnetic Radiations

In the use of the Magnetohydroresonant technology, the battery is applied in the source of energy that feeds systems such as radar and telemarketing systems, automation system controllers, radio broadcasting, television systems, satellites, and land, sea and space transport systems. For airplane pilots and astronauts, the action of the technology creates a pre-electronic environment as it converts positive ions (cations) into negative ions (anions), associated to the emission of natural long-wave infrared, beneficial to plant and animal life, potentialized by Vital Cosmic Energy. It also stimulates the production of β-endorphins, improving people's biological functions, with healing sleep, stress reduction, good mood, activation of cells, metabolism acceleration, psychomotor performance, blood circulation, good reasoning, concentration, recovery from fatigue, strengthening of the immune system, and improvement in performance and productivity. It promotes improvements in all area of the plant and animal kingdoms, which are under the action and protective effect of the Magnetohydroresonant technology, with a subsequent improvement in life quality, removing insalubrity from the environment, maintaining the air pure and vitamined, normalizing the autonomic or motor nervous system and producing a reinvigorating effect on all living beings.

The Magnetohydroresonant Battery technology, applied for protection of the Animal Kingdom, through Spin orientation in reproduction processes and modes of coupling, creates a spiral effect that changes the behavior of effects and structure of protons and electrons, causing the epithelial pattern to transform into new frequency ranges, with transformation and/or potentialization of some aspects or DNA and RNA. This increases the capacity of adapting to more electrically accelerated environments, also perpetuating to new generations, enabling a greater absorption of oxygen and metabolic exchanges in inhospitable systems. Such advance will enable man and animals to survive in environments with high polluting electromagnetic radiation charges of high magnitude, which may occur on Earth in case a terrestrial axis verticalization is confirmed, a fact that is supposed to produce several climatic and meteorological changes with severe influences on the plant and animal kingdoms.

### Current Situation of Availability and Quality of the Water

Water is essential for life. It is the substance that exists in bigger quantity in the living beings, representing nearly 70% or the human body weight, and the lack of it causes weakness or even death. It is essential and is not infinitely available, which seems absurd, as it occupies 70% of the Earth's surface. However, 97% of the water is salty, only 3% of the total is fresh water, and out of these, only 0,01% form the rivers and lakes, where it is available for consumption. The rest of it is found in glaciers, icebergs and very deep undergrounds. Due to its capacity to dissolve almost all chemical elements and compounds, the water in rivers and lakes or in deep wells contains several dissolved elements, such as magnesium, calcium and radioactive elements. Depending on the concentration levels of these elements, the water may or may not be noxious, which we call hard waters. Almost all the hardness of water is caused by the presence of calcium and magnesium salts (bicarbonates, sulfates, chlorates and nitrates) found in the solution. The main ions that cause hardness are calcium and magnesium, and hard waters are characterized by demanding considerable quantities of soap to produce foam, which is the most important aspect, due to the difficulties in cleaning clothes and utensils. As the water boils, the carbonates precipitate, jeopardizing food cooking, and causing stains in the pans. It is potentially dangerous for the functioning of boilers and other equipment which work or function with water vapor, as it may cause explosions. It also causes a series of inconveniences, such as unpleasant taste, soap expenses, inconvenient concentration of soap in the water served, clogging and clingage in pipelines, boilers and heaters, and stains in china, pans and clothes.

The treatment of hard water for the removal of Ca₂+ e Mg₂+ is known as water softening, one of which being conducted through the ionic or cationic exchange, which consists in making the water run through a cationic resin that captures the Ca₂+ e Mg₂+ ions, replacing them for ions that will form soluble components, harmless to man. These resins have limits for ionic exchange, being saturated of Ca+ and Mg, needing frequent regeneration based on the addition of a Sodium Chlorate (NaCl) solution. It is worth to highlight that Kurita of Brazil detains the technology and commercializes cationic resins for hard water softening.

Water is also threatened by pollution, contamination by pesticides and herbicides used in agricultural production and by climatic alterations that humans have been provoking. Besides the danger it represents for man's health and well-being, environmental degradation is pointed by the World Health Organization as an important threat to economic development and have become an element of dispute among nations. A report by the World Bank from 1995 alerted that "the wars of the next century will be fought over water, not because of oil or politics".

The technology described in JP 20055061505A describes a pipe manufactured based on tourmaline crystals to purify water. It is environmentally expensive, as the crystals must be present in the mixture of all the pipes to be produced. JP 20055219980-A deals with a material composition to strengthen concrete for construction; in this case, the crystals must be part of the compound, consuming a great quantity of mineral in order to perform a local work.

### The Use of the Magnetohydroresonant Battery in Water

In the use of the Magnetohydroresonant technology, in order to improve the quality of water, the battery is applied externally, in series, in the form of clamp, in residential or commercial water conducting pipes, in factories and irrigation systems. Its action on the water produces better conductivity, fluidity and turbidity, stabilizes the Ph in basic values, reestablishes the vital energy of the water which had been lost during chemical purification systems, reduces odors, breaks the acquired hardness, dissolves salts in contact with the soil or in chemical processes performed by man, and increases its potability. With its sonic action of pulsation cords of negative ions, it dissolves salt complexes, neutralizes hardness, reduces the "blood out of a stone", and reduces clogging in the vapor systems and oil extraction systems and pipes. It may be applied in conventional irrigation processes, in hydroponic cultivations, electrolysis, in agglomeration processes, revitalizing water and ensuring, with the improvement of the technology, that in the future there is enough water for human needs, avoiding conflicts.

Example E - The use of the Magnetohydroresonant Technology, with a Battery in the form of a clamp with a ¾-inch diameter, applied in the hydrometer support pipe of residences and small businesses, with a daily consumption of 30m³, is enough to treat all the utilized volume of water. For bigger consumers or irrigation systems, the rectangular Basic Batteries are used, applied in sequence or in series around the conducting pipe, in a quantity enough to cover all the treated volume with the action of the technology.

Example F - The spheres obtained by the abovementioned process (Spheres irradiated at the time of fusion/injection by the active Magnetohydroresonant effect), and a washing machine with the capacity of 12kg of dry clothes. The spheres were applied together with the clothes, in the proportion of 3 spheres for each 12kg of dry clothes, filled with hard water, formed by compounds of carbonate salts Ca₂+ and Mg₂+. This experiment results in the formation of foam, break of water hardness, softening and releasing the fabric fibers of the clothes washed, reducing stains and the consumption of soap and softeners, whose excess increases the polluting power by liter of served water. The results presented significant gains in saving soap, softeners and electrical energy during washing and ironing clothes, in the treatment of served water and service time of the operators, and directly and indirectly contributes to the water sustainability of the planet.

### Current Situation of Agricultural Production, Agrochemicals, Fertilizers and Others

Nowadays, plants in general are under the effect of harmful electromagnetic radiations, which tends to intensify due to the demand, being used more frequently and thus more penetrating and more harmful. These produce greenhouse gases that, in chemical reactions in the atmosphere, generate acid rain, which alters rain cycles, causes draughts, unbalances the ecosystem, degrades the soil and its nutrients, provokes the disappearance of the bees, delays and weakens agricultural harvests.

According to FAO, Food and Agriculture Organization of the United Nations, in the last 50 years, 45% of the bee species disappeared and, as they render valuable services for the production, their disappearance is concerning. The issue is so serious that the Ministry of the Environment is stimulating researches about the topic, such as the "Conservation and Management of Pollinators for Sustainable Agriculture, through an Ecosystem Approach" project. The equation is simple: Pollination performed by the bees is responsible for 35% of the world's food production, which represents 220 billion dollars per year in the planet's economy. And according to FAO, the Food and Agriculture Organization of the United Nations, it will be necessary to produce 70% more food until 2050, when the population will be of 9,1 billion inhabitants. With today's population, and still counting with a considerable population of these insects, in some countries it is already necessary to have manual pollination, raising the products prices even more. It is not hard to foresee how much we will miss this important natural element in the food production chain, when the demand needs the 70% level predicted.

The degradation of the ecosystem favors the proliferation of plagues and the weakening of the soil, demanding more applications of agrochemicals, fungicides and bactericides to combat them, and more applications of composts and fertilizers for the recovery of agricultural soils. This problem seriously affects the energetic quality of Brazilian agricultural products, especially fruit farming, which frequently has part of its products rejected by the international market, for not meeting the energetic concentration, sweetness (Brix degree), shine and intense color standards. Brazil is a great importer of wheat flour, as we do not produce wheat with enough gluten quality to grant the capacity to produce bread, the so-called bread wheat.

### The Use of the Magnetohydroresonant Technology, in the form of a Battery, in Agriculture

The use of the Magnetohydroresonant technology applied in agricultural production occurs through the installation of the Battery on the inert diffusing vectors without energy, or utilizing active diffusing vector irrigation systems, and support systems, cables and wires for grapevines, apple trees, and other inactive diffusors.

In seasonal agriculture, the installation of the diffusors is conducted in a continuous way, forming parallel rows, equidistant from each other (5m), coming and going through the entire agricultural area to be treated. After this, the Battery is installed, fixing it on the diffusors along the rows, with the 1^{st} one installed 25m from the initial end, and then after each 50m, utilizing 20 units per hectare.

In the irrigation system, the batteries must be fixed in the water pipe, added according to the flow in m³/h and, in the case of utilizing already existent cables or wires, in some perennial cultures, the batteries must be installed as described above. Once installed, the Magnetohydroresonant battery will emit natural long-wave infrared, vital cosmic energy and negative ions (anions) over the treated area 24 hours a day. This increases photosynthesis time and capacity, creates a protection area, blocking the action of electromagnetic radiations, converts the positive ions (cations) from the air and soils into negative ions (anions), making them available for the plant. It also increases the plant's capacity to absorb micro-nutrients from the air and soil, improves the phytotonic effect and carbonic connection, generating plants with greater vigor, better ramifications in the roots and capillaries, higher foliar mass and chlorophyll, with greater capacity to absorb and fix nitrogen. Furthermore, it raises the nutrient reserves in tubers, increases the reproductive and productive capacity of the plants, anticipates harvests, increases the Brix degree of fruits and culms, produces more nutritious fruits, culms, grains, seeds and vegetables, with higher energetic value of up to 8.100. Finally, it increases carbon (CO₂) sinks, and in the same proportion releases more oxygen (O₂) per hectare, producing more abundant harvests, more than 10% above the previous average.

The use of the Magnetohydroresonant technology, in form of a Battery, applied in vegetable cultivation, occurs in traditional or hydroponic cultivation, in the growth of crops from the family of the leguminous, gramineous plants and perennial cultures. It improves the plant's capacity to absorb micro-nutrients from the air and soil, improves the phytotonic effect and carbonic connection, generating plants with greater vigor, better ramifications in the roots and capillaries (which enables better fixation in the soil), higher foliar mass and chlorophyll (with greater capacity to absorb and fix nitrogen and to raise nutrient reserves). It also increases the reproductive and productive capacity of the plants, anticipates harvests, increases the Brix degree of fruits and culms, produces more nutritious fruits, culms, grains, seeds and vegetables, with higher energetic value of up to 8.100. Finally, it increases carbon (CO₂) sinks, and in the same proportion releases more oxygen (O₂) per hectare, producing more abundant harvests, more than 10% above the previous average.

The use of the Magnetohydroresonant technology in sugar cane and sweet sorghum cultivation increases the development of culm mass and the level of Brix degree in their juices, while improving alcohol or sugar productivity. These improvements are connected to the higher carbon sink, releasing the same percentage of oxygen into the atmosphere. In sugar canes destined for the multiplication of crops, the active Magnetohydroresonant effect perpetuates in the new planted areas, increasing the phytotonic effect and producing all the benefits previously described.

In the growth of plants from the family of the leguminous and/or gramineous for the production of cereal such as wheat, corn, rice, beans, soy and others, the use of the Magnetohydroresonant battery protects the cultures, increasing the energetic value of the grains up to 8.100, and raising the Ph for basic. Therefore, it produces grains with capacity to produce oil of superior quality and lower acidity index, anticipates harvests with increase in production and quality, with bigger grains with colorful aspect and intense shine. It also improves stocking time in barns reducing loss, and produces grains with greater productive and reproductive capacity with phytotonic effect. In the cultivation of wheat, the action of the Magnetohydroresonant battery, through the permanent action of natural long-wave infrared, enables the production of grains with superior gluten force (W).

In perennial cultures such as coffee, cocoa, cashew, apple trees, olive trees and others, the use of the battery increasing the energetic value of the fruits and seeds up to 8.100, raises the Ph for basic, produces seeds with capacity to produce oil of superior quality and lower acidity index, increases the level of Brix degree in fruits and seeds, anticipates harvests with increase in production and quality, with bigger fruits and seeds with colorful aspect and intense shine. It also enables the voluntary delay of the harvest maintaining quality, maintaining the vigor and nutritious value of the fruits after harvest. Finally, it also improves stocking time reducing loss, and produces seeds with greater productive and reproductive capacity with phytotonic effect.

The use of the Magnetohydroresonant technology, in form of a Battery, is also applied in sheds or barns that keep agricultural harvests, by means of active or inert diffusing vectors connected to the batteries, distributed over the area within a 5m distance from each other. It creates an insalubrity-free environment, maintains the nutritional and germinant properties of healthy seeds and grains, aggregates energy and vitality to the stocked products, reduces the incidence of fungi, parasites and larvae during the stocking process, either bulk or is bags.

With the use of the Magnetohydroresonant technology, in form of a Battery, in electrical energy, in combustion and water systems utilized in industrialization processes, the originated product is impregnated with part of the active Magnetohydroresonant effect properties, acquiring energy and vitality that may be maintained beyond the previously established expiration date, that is, products with a better shelf life, energy, nutritional quality, and lower loss. The transference of properties to the products may occur during the industrial action of drying ovens, during cooking or boiling, in the production of distilled or fermented drinks, natural juices, edible oils and wheat derivatives, from cocoa in the production of chocolate, from coffee grains in roasting and grinding, in the juices obtained from fruits, among others. The reduction of odors characteristic of industrial freezer packing plants, pet food factories, grinding and production systems of vegetal oils is evidently reduced. This is relevant, as in many regions the industrial plants are located within urban areas, and cause discomfort and disturbance in the surrounding areas and their population. These odors are minimized, but they may also be restricted to the industrial area, with the employment of ionized nets around the plant, through the Battery.

The active Magnetohydroresonant effect technology, applied in the production of seeds and plant starts of any plant species, incorporates the active Magnetohydroresonant effect properties in the genes of these seeds and plant starts. Such properties are fixed and manifested in the following generations, becoming biostimulating with higher phytotonic effect, greater productivity and quality, which propagate until the third generation.

### Situation of the Alloys in the Present Day and Electromagnetic Fields

Electromagnetic fields exert action, as we have already seen, over all the domains it reaches, causing alterations depending on the degree of immunity, and on the radiations of each of the elements which constitute them, mineral, plant or animal. What is known is that, in decades when little or nothing that artificially generated these fields existed, the alloys and steel presented superior quality to the ones we use today, as it is acknowledged that there are very few regions of the planet where the radiations from these fields do not come through radio broadcasting, cellular telephony and satellites, in different intensity degrees and without geopolitical frontiers.

The atoms of the metals that join to form an alloy are constantly under the influence of a bigger or smaller electromagnetic field, exerting a certain action over these atoms, somehow altering their movements inside the crucible when they are in liquid state during the casting process. Such alteration also occurs during the cooling time, which is believed to change the accommodation of these atoms in a small degree, but enough to alter the characteristics they would naturally have without the presence of these fields, as occurred in past decades, in pre-electronic decades.

### The Use of the Magnetohydroresonant Battery Technological Innovation in Steel Mills

In the active Magnetohydroresonant effect technology, applied in the transformation processes of the animal kingdom, the battery is applied in the electric energy that feeds fusion ovens, or batteries are grouped in the form of hollow curtain and applied in the combustion air of steel mill ovens. The active Magnetohydroresonant effect is incorporated in the material or alloys resulting from transformations in all the physicochemical processes of casting, transformation, distillation, agglutination, deposition of metal and non-metal alloys in the welding processes, making the metal and non-metal alloys more resistant, as well as ferrous and non-ferrous metals.

A special situation occurs in the casting of siliceous iron alloys destined to a core of transformers, cast under the effect of the Magnetohydroresonant technology. The alloy incorporates the Magnetohydroresonant properties, acquiring the capacity to permanently reproduce negative ions (anions), and acting on the transformer similarly to the battery when installed on the cables or electric panel boxes, thus enabling the production of transformers which do not affect the environment.

The same process occurs in the fusion of duralumin, employed in the manufacturing of blocks and pistons for internal combustion engines, which may reduce the emission of polluting gases by 30%, also reducing consumption, thus creating the real possibility of producing more efficient and environmentally correct engines, without altering the currently active industrial parks.

The active Magnetohydroresonant effect technology, applied in the fusion technique and transformation processes of the mineral kingdom, is applied in the electric energy that feeds fusion ovens, or batteries are grouped in the form of hollow curtain and applied in the combustion air of steel mill ovens. The active Magnetohydroresonant effect incorporates, through the electrical energy or the assisted combustion flame, its properties into the materials or alloys resulting from the processed fusion.

The curtain, installed in the same way on the combustion air outlet of the ingot casting ovens in the production of these alloys is steel mills or metallurgical plants, improves their characteristics foreseen and regulated by the Brazilian Technical Standards Association - ABNT, such as resistance to traction, compression, shearing and oxidation. Aggregated by the active Magnetohydroresonant effect technology, in the casting of metals and metal alloys, it improves resistance, enables machining, reduces oxidation and meets all the other specific characteristics established by ABNT.

### Current Situation of the Industrial Production of Rubber Artifacts Manufacturing

Natural rubber, extracted from the Rubber Tree, native from Brazil, produces natural latex with two genes, soft Gel and hard Gel. It also contains ionic calcium reticules in its composition, which associate to nanoparticles, as well as ionic reticules of other elements associated to latex, constituted of negative ions. In its structure, it contains diverse elements of the periodic table, which grants it with exceptional qualities to withstand extreme temperatures, and return to room temperature in a few seconds.

Thanks to its special properties, natural rubber is utilized in the manufacturing of more than 50 thousand products, such as tires, condoms, surgical materials, wires, fabric, adhesives and disposable gloves. Nearly 70% of the world's production of rubber is destined to the manufacturing of tires with synthetic mixtures, conducted under the influence of electromagnetic fields charged with positive ions (cations), altering the original characteristics and a great part of the properties of these mixtures, resulting in products with less resistance and durability.

### The Use of the Magnetohydroresonant Battery Technological Innovation in the Manufacture of Rubber Artifacts

The application of the Magnetohydroresonant technology, in the form of Battery, in the electrical energy that moves production lines of manufacture of rubber artifacts, neutralizes the positive electrical charges, creating a pre-electronic environment, charging the environment with natural long-wave infrared, vital cosmic energy and negative ions. This aggregates and recovers the natural characteristics of the latex, which had been lost due to the action of positive ion charges generated by electromagnetic radiation fields and to the action of the materials aggregated to it. Rubber regains its original properties, such as elasticity, resistance to fatigue, improvement in the Shore A hardness, resistance to De Mattia flex, resistance to abrasion and all the other specific characteristics established by ABNT, in the production and benefitting of derived products in the extrusion or any other industrialization process, such as tires, hoses or soles. It also aggregates all the specific characteristics expected and established by ABNT for all the products directly or indirectly derived from polymers and synthetic fibers, carbon fibers, improving resistance to impact, to abrasion, compression, shearing and traction.

In the Magnetohydroresonant technology, applied in the production of any product originated from the alloy formation technique, in the manufacture of rubber artifacts, during fusion, part of the properties of the active Magnetohydroresonant effect technology is incorporated or lodges in the structure of the originated product. These properties, such as the capacity to emit negative ions (anions) and to capture and emit vital cosmic energy, are acquired by transference, and start manifesting permanently.

Example: in this specific example of the impregnation of a natural TR 15/50 light thermoplastic sphere, a prototype in the form of a Magnetohydroresonant battery was applied, in the electrical energy cables that serve the electric panel box and the command of the injector machine by fusion-injection technique. Regarding the natural TR 15/50 raw material employed in the manufacture of the originated product, injected under pressure in the spherical form, with 16cm of diameter and protuberances in the form of small cones of 3mm of height and 3mm of diameter, with between 121 and 144 cones per sphere, the most appropriate material was the Natural 15/50 Light Thermoplastic or similar. The spheres obtained start to permanently emit vital cosmic energy and pulsating negative ions, properties acquired during the fusion/injection process which, if applied in a washing machine, in the proportion of 3 spheres for each 12kg of dry clothes, filled with hard water and carbonate salt compounds Ca₂+ and G₂+, results in the formation of foam.

The unprecedented advantage of the Magnetohydroresonant technology to transfer part of its properties, is that with a small quantity of Magnetohydroresonant batteries applied in the production line in great scales, once distributed in the market, they start acting with their properties acquired by transference, in the environments where they are received, as branches of the "mother" battery installed in the factory.

### CONCLUSIVE BRIEFING OF THE DESCRIPTIVE REPORT

All the known products which circulate in the market, without exception, have a limited service life, with monthly and/or annual costs of maintenance and periodic repairs, need an operator to work, consume electrical energy or fossil energy with frequency refuels, need an on/off switch and perform only that task for which they were developed, doing it limitedly, as they depend on operators, besides polluting the environment with GHG or electromagnetic radiations.

Fossil fuels are the basis of all investments in human resources and infrastructure, in order to develop, move and expand the scientific, technological and economic progress we witness, anchored and represented by the valuable and vast infrastructure installed in the five continents, in the form of industrial parks, roads, railroads, airports, ports, thermoelectric plants, telecommunications, computers, extraction platforms, fossil fuel distillation and benefitting plants, as well as land, air and sea vehicles which come and go, transporting goods and services.

All this richness, including the fuel reserves, is threatened by the greenhouse gases (GHG) effects. And if the expansionist policy imposed by the demographic demand is maintained, in some moment it will collide against the limit of the thermal environmental sustainability balance of the planet, scrapping the entire installed park and the fossil fuels reserves, rendering life on Earth as we know it unfeasible.

The Magnetohydroresonant Battery technology, with environmental vocation since its structure and manufacture, carries the green concept to all activities, as it operates in all known economic segments, mainly in the energy sector, which is the most critical. It reduces by up to 60% the emission of greenhouse gases - GHG emitted by the solid, liquid and gas fuels of fossil or renewable origin and, finally, fulfills the most urgent needs, and which require immediate solutions for economic growth with environmental sustainability.

It is not about something similar to what is classified and identified as a product, as the active Magnetohydroresonant effect technology has the same service life as the propylene, subject to damage by only some acids, does not generate monthly costs as it does not need maintenance and periodic repairs, does not need an operator to function, its fuel is natural light which is free, does not have an on/off switch and simultaneously performs more than one task 24 hours per day, features which place this technology distant from the regular pattern of what is known as a product.

We may already state that we are presented with a new technology, a new way of capture and interaction of clean energy, which acts on the environmental imbalance, harmonizes and synchronizes electrical systems, and enables the continuing utilization of the natural resources of fossil energy available, and expand the valuable infrastructure installed, maybe with the green endorsement of the Magnetohydroresonant technology. This will maintain the growth status with benefits to the productive processes, broaden the production of necessary food, machines and equipment, make hard water available for consumption, block the harmful electromagnetic radiations (mainly the cell phone radiation), reduce the harmonics from the electrical energy network, improve the reach and quality of radio and TV signals, reduce the inconvenient shadow zones from radio, TV and cell phone signals, aggregate energy in industrialized foods, bring the water Ph to an acceptable level and maintain it, increase the Brix degree of fruits, sugar cane and sweet sorghum, reduce insalubrity in the barns, reduce costs, and improve agricultural quality and productivity.

The Magnetohydroresonant aggregates high technology and brings significant benefits in all economic activities when it is present, such as improvements regarding electromagnetic radiations, food toxicity due to chemical products used in agriculture, greenhouse gases - GHG emitted by vehicular systems and industrial chimneys generating acid rains. The effects of these acid rains can already be seen, unbalancing the temperature of the oceans and having impact all over the planet, for example: windstorms, rainstorms in some areas and draught in other, epidemics, disappearance of bees, among others, a situation which threatens the possibilities of live on the planet.

The Magnetohydroresonant Battery is formed by an innovative technology, environmentally correct, non-chemical, eminently physical, of physical action, supported by three active principles that act 24 hours a day over the treated area, where the first active effect emits natural long-wave infrared which is beneficial to life of plants and animals. The second active effect, emitter and inverter of ions, converts positive ions (cations) that and insalubrious and harmful to the environment, to plant and animal life, into negative ions (anions), beneficial to the environment, to plant and animal life. And the third active effect, which captures and emits vital cosmic energy (immanent energy) and negative ions (anions), and which involves the two former principles, potentializes them and broadens the reach of their actions through the air in short distances, and in greater distances through diffusing vectors such as metallic wires, plastic, water, among others, providing them with mobility of the effect action, which may then manifest at the extremes of the diffusing vectors.

This characteristic proves to be very useful in agriculture, in the dissemination of the property of the technology in vast plantation areas, utilizing these diffusing vectors, mainly the plastics for their low cost (ribbon, biodegradable plastic material that in two years integrates to the soil), the already installed irrigation system and others. It is also useful in the application in dark and insalubrious environments, such as sheds, barns, the inside of caves and mines, which keep the Magnetohydroresonant Battery away from the presence of natural light, its fuel.

It is a clean technology, of easy application and non-pollutant, working similarly to a regular battery, but it is far from being the same. It dispenses the costs and the unpleasant task of recharges, repurchases and residual toxicity in the exhaustion, operating in the dreamed and desired principle of continuous movement or generation of energy, which reduces costs of installation, management, operation and maintenance. Such property allows the battery to operate both in cities and near unexplored regions, which is really useful for rural zones and agricultural areas, where it highly contributes.

The service life of the Magnetohydroresonant Battery is only limited to the service life of propylene, plastic agent utilized as a binder. We have prototypes of these batteries manufactured six years ago, in perfect working conditions, the same as the more recently manufactured ones. Such property is important in the definition of cost-benefit, as the purchase value may be diluted into (6 x 12) 72 months, and it is the only expense made, as the battery does not depend on operators or periodic maintenance to operate, which generate costs. These are relevant qualities to be considered by companies at the time of its purchase, for the representativeness of the weight that the "service life" item has in family, commercial and industrial economy in the composition of investments and/or purchase costs.

There was a need for something new in the science field, in the technological innovation field, to leverage humanity from the stalemate it has reached, by continuing the current cycle of economic growth, exceeding the limit of exploration and utilization of the planet's natural resources, due to pressures imposed by demographic growth, demanding greater production of food, more generation of energy and broadening of communication services, basic segments which support socio-economic development. Basic segments which, however, are the cause of global warming, also causing delays in expansionist decisions by the stalemates they generate, which we believe is the present reason of the global economy slowdown.

It is exactly in these areas that the Magnetohydroresonant technology acts with exuberance, breaking the stalemate created and enabling the necessary growth without damages to the planet, in the use of fossil fuels, agrochemicals, pesticides, insecticides, and radio microwaves for communication. That is:

### 1- Diet

### 1.1 - Current situation

In the agricultural activity, we live the limit of acceptance in the use of agrochemicals and pesticides, still counting with the remaining bees, whose free pollinizing services correspond to 85% of the food production. A study coordinated by the National Institute of Agronomic Research of France estimates that the economic value provided by the insect in pollinizing is higher than 150 billion Euros, equivalent to nearly R$ 360 billion, or 10% of the world's agricultural GDP. The equation is simple: Pollination performed by the bees is responsible for 35% of the world's food production, which represents 220 billion dollars per year in the planet's economy. According to FAO, Food and Agriculture Organization of the United Nations, in the last 50 years, 45% of the bee species disappeared and, as they render valuable services for the production, their disappearance is concerning. Still according to FAO, it will be necessary to produce 70% more food until 2050, when the population will be of 9,1 billion inhabitants, generating a significant stalemate between the necessities and the possibilities of growth in food production.

### 1.2 - The action of technology in food production

The action of the Magnetohydroresonant Battery in food production opens new paths, as it matches population growth with the environment, with gains in quality and production per hectare, reduces the need for agrochemicals, pesticides and insecticides, by the presence of natural long-wave infrared, Vital Cosmic Energy and emission of negative ions (anions). This, through the phytotonic effect, produces plants with better vigor, germination and development of roots, improves the absorption of nutrients from the atmosphere and the soil, absorbs more CO₂, retains more carbon which guarantees the plants' strength, and releases O₂ to the environment in the same proportion, while blocking the serviced area from the effects of electromagnetic radiations.

The Magnetohydroresonant Battery technology has proven its efficiency, for example, in fruit farming, plantations of soy, corn, beans, rice, wheat, hydroponic cultivation, vegetable cultivation, sugar cane cultivation, sweet sorghum, grapevines, in barns, among others. The action of the active principle of the technology on agricultural products is significant, due to the intimacy that the technology has with water, and the plants and soil present high level of water in their composition. The technology corrects the Ph soil and maintains it at acceptable values while installed, and also turns basic the Ph of the sap of plants, fruits, cereals, sugar cane, sweet sorghum and vegetables, increases the Brix degree of the sweet gramineous such as sugar cane and sweet sorghum, and fruits such as grapes, oranges, apples, peaches and others. It also aggregates more production per hectare, anticipates harvests, infuses energy to the products, which is one of the greatest Brazilian problems regarding food exports, due to the energetic deficiency of industrial and natural food products. Thus, it reduces the need for application of agrochemicals, fungicides and pesticides, making the foods more organic, improving the flavor of the resulting food items, whether industrialized or natural, maintaining them in the harvest or on shelves for a longer time in good consumption conditions, reduces losses for expiration dates, improves color and appearance of the fruits and vegetables.

In wheat, due to its need for the presence of long-wave infrared, the Magnetohydroresonant Battery may raise its gluten (W) concentration through the permanent emission of long-wave infrared. In Brazil, wheat is very little produced, due to climatic conditions, which makes Brazil dependent on and a potential importer of this cereal. The Magnetohydroresonant Battery technology enables the obtention of seeds and plant starts, with part of its properties incorporated to their DNA, in such a way that in future generations these seeds or starts dispense the application of the technology in their plantations, reproducing by themselves the properties of the Magnetohydroresonant technology in their descendants. "We suspect, and that is why we are researching, that the active principle alters the DNA, permanently aggregating to the DNA of plants and animals, improving their immunity, making them stronger, healthier, more energized, becoming immune to electromagnetic radiations, more resistant to fungi, bacteria, viruses, and diseases such as colds, the flu, and others".

### 2 - Energy

### 2.1 - Fuels

2.1.1 - Current situation: regarding the energetic activity of fuels, the stalemate is still more critical if compared to food and communication, for being the flagship of energy conversion. The Kyoto protocol imposes limits in the emission of polluting gases, emitted by the land vehicular system, responsible for 20% of the total emissions, and by the industrial, steel mill and thermoelectric chimneys, which account for the remaining 80% of the CO₂ emissions that pollute the atmosphere. Operation licenses are denied to new thermoelectric plants fueled by coal and diesel, while the ones in operation are pressured to close by governmental regulatory and controlling agencies which control the Kyoto goals.
   If we were able to count neither with the nuclear reserves due to the evident risks, nor with the coal/diesel reserves available as their use generates acid rain and other environmental problems, we would have to shut down the thermoelectric and other plants powered by these fuels. However, these fuels support the indispensable socioeconomic development, to which all the investments in researches and technology development have been directed. These fuels power terrestrial extraction structures, maritime platforms, benefitting structures and distillation plants, in the industrial infrastructures installed in the 5 continents, as well as the vehicular systems which move, through land, sea and air, the world's economy.
   Deactivating the entire industrial park and all the support infrastructure which cost humanity trillions of dollars, and managing the social chaos that forced eviction would impose on humanity, as well as the hunger and violence imposed by the scarcity resulting from gradual deceleration of the economy is what seems to be the path we are heading to.
   The Kyoto treaty, which unites a group of member countries established reduction goals of the greenhouse gases emission, and conditions operation licenses for new companies emitting GHG to the purchase of carbon, named "carbon credit", or to the planting of trees in areas equivalent to the emissions. However, this solution, in short term, is similar to a blood transfusion in which the donor is the own patient, as nothing external to the natural resources of the planet aggregates to it in terms of the effective solution it needs, in order to be relieved from the already unbearable pollution that ravages it. That is: Ceding carbon in the form of credits, guaranteed by the already scarce forest reserves existent, so that more pollutants are emitted by new industries, steel mills and thermoelectric plants, added to more and more vehicles circulating each day, will end up taking the system to collapse. The Kyoto initiative is very praiseworthy, mainly regarding the reforestations which will bring benefits in 10 to 15 years, in air quality, maintenance of the hillsides or maybe even the reappearance of others, and maintenance of the flora and fauna. However, such benefit does not coincide with the moment of the operation license, as it requires 10 to 15 years of maintenance, a period in which the planet will have to solve these problems by itself, due to the emissions that will occur immediately after the operation license date.
2.1.2 - Action of the technology in fuels: it is exactly in the application in fuel energy that the Magnetohydroresonant Battery technology has the most redemptory action. It opens the way for the use of fossil and solid, liquid and gaseous renewable fuels, as it reduces by up to 60% the levels of HC, CO, CO₂, NOₓ, SOₓ, and O₃ emitted by the land, maritime and air vehicular systems, by the industrial, steel mill and thermoelectric chimneys, also reducing the so-called particulates originated by the toxic smoke expelled over the cities, aggravating the situation as they react in the atmosphere, provoking acid rainfalls and all the environmental problems resulting from it.

That is, we are facing a technological innovation, which promises to seal with a Green Stamp all the known fuels utilized in controlled burning, whether by Diesel and Otto cycle engines, airplane turbines and ovens of solid, liquid and gaseous fuels. It will act "as an external source, enabling the real generation of carbon credit", and the reduction in the consumption of these fuels by 5 to 20%, varying in accordance with the kind of fuel treated.

The possibility this innovation brings for the socioeconomic development allows us to prophecy, due to the enlarging of the time available for researches, to develop safe ways to use nuclear energy and without residues, and to rescue the nuclear energy reserves available to use in a distant future.

### 2.2 - Electrical Energy

2.2.1 - Current situation: in the electrical energy systems we have persistent problems current science still does not possess the technology to solve, which are the harmonics. They are generated by residential, commercial and industrial electric and electronic equipment, such as computers, TVs, microwaves, radios, fluorescent light bulbs, sound systems, fridges, air conditioners, electric arc ovens, elevators and water pumps. They need Reactive Energy to function, but this energy is not consumed by them, and are divided in multiples of 3, 5, 7, 9, 11 of generation frequency, and generation current and tension. These harmonics start circulating throughout the system since their generation, and provoke several losses and damages, both to suppliers and consumers. It causes overheating due to Joule effect and noise in engines and machines, reduces the service life of all engines and equipment of the connected consumers, as well as in all equipment of the electrical energy network of the supplier, besides overloading the system since the generating source, the transmission and distribution network, affecting transformers, switch systems, protection and wiring systems.
2.2.2 - Action of the technology in electrical energy: in the electrical energy segment, the Magnetohydroresonant Battery technology proves its efficiency, as it reduces the effects of the Harmonics, bringing significant gains for economy, such as: 1 - It improves the efficiency and service life of all the equipment which composes the electrical energy generation , transmission and distribution network, reduces costs of replacement, maintenance and repairs in wires, protections, transformers and other equipment of the transmission and distribution lines of the energy suppliers, as well as of the residential, commercial and industrial consumers. 2 - It improves the efficiency and service life of all the residential, commercial and industrial electric and electronic equipment, reduces costs of replacement, maintenance, repairs and electrical energy consumption of these pieces of equipment. 3 - It improves the quality, resistance and fusion time of the Spot welding, reduces the toxicity of the electric welding smoke (carbon black) by 60,5%, reduces welding spatter and increases weld depth. 4 - It improves the quality and fidelity of image and sound equipment, as it reduces vibrations and noises caused by the harmonics. 5 - It improves the power and propagation of radio, TV, cell phone, wireless internet and GPS signals, while reducing the shadow zones of radio, TV and cell phone signals.

### 3 - Communications

3.1 - Current situation: it is known that all electronic devices, in different degrees, emit electromagnetic radiations when in activity. However, the radio broadcasting communication devices, are supported by electromagnetic waves - called carrier waves, which enable the sound, image and data communications, spread these radiations through the atmosphere and in all directions.

It is only possible to broaden what already exists regarding cell phones, AM/FM radio, TVs, GPS, and others, if we utilize higher frequencies than the ones already used, thus more penetrating and in even higher microwave levels, causing even more damage to humans, plants and animals.

The most evident example is the already known phenomenon called CCD - *Bee Colony Collapse Disorder,* in which electromagnetic radiations emitted mainly by cell phones, might be damaging the sensitive orientation system of the bees, causing them to get lost in the Beehive/Flowerbed and Flowerbed/Beehive, without leaving any tracks behind. Recent research conducted by Daniel Frave, from the Swiss Federal Institute of Technology, guarantees that electromagnetic signals bring consequences to the insect. Cell phones might be confusing or even killing the bees around the world.

A study conducted in 2009 and published in May 2011, reveals that, after 20 hours of exposure to these signals, the bees emit a sound to abandon the house. For the experiment, Favre recorded the sounds of bees exposed to electromagnetic signals emitted by cell phones and observed the production of sounds similar to the ones the bees produce when they abandon the beehive. According to the researcher, previous studies showed that the prolonged exposure to cell phones made the bees fail to find their way back to the beehive, leaving it practically empty in 5 to 10 days.

Without exempting the other possible causes, such as pesticides, dioxins and parasites, it is believed that the electromagnetic radiations emitted by communication systems and released in all directions through Aether by the antennas maintain positive charges (cations) in the atmosphere. It is the great aggressor to life, mainly to the sensitive King bee insect, as it disorients, destabilizes and harms its sensitive orientation and communication system.

An article published in Planet Magazine, No 412 of January 2007, called "Dangerous Technology - Cell Phone May Make Men Infertile", says that scientists from the Cleveland Clinic Research Center, USA, guarantee that the use of cell phones might jeopardize the semen production and cause sterility. The electromagnetic radiations, as we have seen, actually damage plants and animals. Such fact generates a serious and significant stalemate for the possibilities of growth in communication systems, as in order to expand them, the use of even higher frequencies is demanded, more penetrating than the current ones which already cause a great deal of damage.

3.2 - Action of the technology in communications: the application of the Magnetohydroresonant Battery technology opens the way for the expansion of communication services, acting as a "blocker at the origin" of the electromagnetic radiations, enabling the recreation of a pre-electronic environment around the protected object. Thus, the application of the battery in the electrical network that feeds communication equipment improves the quality of the signal and broadens the reach of radio signals, reducing shadow zones. The presence of the technology in these installations also allows the liberation of new frequencies, enabling the expansion of the already existent communication services. This expansion will then bring environmental benefits, as it will increase the levels of negative ions (anions) released into the atmosphere by the antennas, which will act over the positive ions (cations) present in the atmosphere, converting them into negative ions (anions), contributing to reduce acid rain and the collapse of the bees, aiding in the restoration of the ozone layer, maybe surrounding solar electromagnetic radiations, stabilizing the development of forests, and even reducing expenses with electrical energy by 5% to 15%.

## Claims

1. "RECEIVING, CONVERTING AND EMITTING BATTERY OF THE ACTIVE MAGNETOHYDRORESONANT EFFECT", wherein composed by a mixture which comprises HYDRORESONANCE, BIOMAGNETIC, propylene and Black Tourmaline.

2. "RECEIVING, CONVERTING AND EMITTING BATTERY OF THE ACTIVE MAGNETOHYDRORESONANT EFFECT", according to claim 1, wherein consisting of 09% to 19% w/w of Hydroresonance, 81% to 89% w/w of propylene, the Biomagnetic consisting of 09% to 19% w/w of Hydro-resonance, 18% to 39% w/w of Black Tourmaline and 67% to 84% of propylene.

3. Preparation process of the Hydroresonant liquid compound, and its subsequent solidification to be employed in the preparation of the "RECEIVING, CONVERTING AND EMITTING BATTERY OF THE ACTIVE MAGNETOHYDRORESONANT EFFECT", as established in claims 1 and 2, wherein the Hydroresonant water is composed by potable water added to 1/3 or 1/12 of rainwater, collected without grounding, in a volume between 57 and 120 liters depending on the ionizing by the rainwater, is obtained by impregnation with the minerals Al, Ba, Cu, Cr, Sr, Mn, Zn, Be, Mg, Ne, F, Br, S and K, among others. Th mixture is homogenized by batch, submitted to process of open air floating oscillating rotation, with neutral electromagnetic field, forms macromolecules without residue waste into the environment. The impregnated water becomes Hydroresonant, in a new quantic state with electronic network connected to flotation of anomalies of hydrogen between 57 and 65.

4. Preparation process of the Hydroresonant solid compound to be employed in the preparation of the "RECEIVING, CONVERTING AND EMITTING BATTERY OF THE ACTIVE MAGNETOHYDRORESONANT EFFECT", in accordance with claims 1, 2 and 3, wherein it solidifies hydroresonant water, which is the incorporation of energies from hydroresonant water by means of an agglutination technique. In virgin polypropylene polymer granules, inside a special electromagnetic field with rotation between 12 and 36 vortices by thermal sine waves, with evaporation between 21°C to 210°C, the nano-micros thereof are incorporated into the propylene granules, which permanently maintain the oscillating energy of the natural electromagnetic frequencies of the Earth between 7,83 and 13,5 telluric hertz, (Schumann Resonance). The propylene granules, with the incorporated technology, are injected in hydroresonant strips from Receiving, Converting and Emitting Batteries, to be coupled in the Biomagnetic compound strips.

5. Preparation process of the Biomagnetic solid compound to be employed in the preparation of the "RECEIVING, CONVERTING AND EMITTING BATTERY OF THE ACTIVE MAGNETOHYDRORESONANT EFFECT", in accordance with claims 1, 2, 3 and 4, **characterized by** the solidification of the energies of Hydroresonant waters, purification and potentialization of black tourmaline powder crystals, as well as by solidification of multicrystals, hydroresonant water in propylene.

6. Preparation process of the black tourmaline solid compound to be employed in the preparation of the "RECEIVING, CONVERTING AND EMITTING BATTERY OF THE ACTIVE MAGNETOHYDRORESONANT EFFECT", according to claims 1 and 2, wherein the process of obtention of the pure and potentialized crystals from black tourmaline powder, which comprises innumerous elements in its composition, such as boron, lithium, sodium, iron, aluminum, as well as traces of several other elements. The multicrystals submitted to the processes developed in oven, by means of reductive oxidation, through a process of synthetization and mutation of the potentialized area, with oscillating thermodynamic flotation between 120°C and 750°C, are purified and potentialized 57 to 357 times from its original state. Many of the elements which are undesirable and unnecessary for the proposed function are eliminated in this process.

7. Preparation process of the "RECEIVING, CONVERTING AND EMITTING BATTERY OF THE ACTIVE MAGNETOHYDRORESONANT EFFECT", as defined in claims 1 and 2, wherein employing the Hydroresonant and Biomagnetic solid compounds, injecting the solid compounds in strips, mechanically coupled to form the Battery.

8. Preparation process of the "RECEIVING, CONVERTING AND EMITTING BATTERY OF THE ACTIVE MAGNETOHYDRORESONANT EFFECT", in accordance with claims 3 and 4, wherein the impregnation with minerals occurs in percentage (%) relative to 1kg of sample: Al (0,0058758 to 0,0182469), Ba (0,0000698 to 0,00013466), Cu (0,0000407 to 0,0000881), Cr (0,0003635 to 0,0003771 ), Sr (0,0000358 to 0,0001313), Mn (0,0001647 to 0,0003346), Zn (0,0086550 to 0,0024102), Be (0,0005415 to 0,0018166), Mg (0,0192150 to 0,0257325), Ne (0,0005243 to 0,0012188), as well as traces of F, Br, S, K.

9. Process of preparation of the Biomagnetic solid compound to be employed in the preparation of the "RECEIVING, CONVERTING AND EMITTING BATTERY OF THE ACTIVE MAGNETOHYDRORESONANT EFFECT", as defined in claims 1 and 2, **characterized by** the junction of the pure and potentialized crystals with the Hydroresonant water. We produced a mixture of the two basic activating components between 2:9 QS and 5:15 QS, a primordial high density hydroresonant soup. The tempered crystals are submitted to an evaporative centrifuge with oscillating temperatures between 21°C and 210°C, submitted to an electromagnetic field in the form of inverse rotation, of 8 to 36 vortices, and to an agglutinating technique, with rotations between 1.900 and 8.000 rpm, preferentially between 1.000 and 3.500 rpm. The activators merge in nano-micro tubes inside the virgin polypropylene polymer granules, with the following mineral levels, in percentage (%) relative to 1 kg of sample: Al (1 ,6456923 to 4,7570721 ), Ba (0,0020748 to 0,0023364), Cu (0,0005039 to 0,0011384), Cr (0,0007333 to 0,0027413), Sr (0,0002942 to 0,0008043), Mn (0,0133294 to 0,0308743), Zn (0,0041521 to 0,0244534), Be (0,0051791 to 0,00129834), Mg (0,0173375 to 0,5376657), Ne (0,0030513 to 0,0011668), Br . (0,0165023 á 0,01099382), S (0,0010317 to 0,0046112), C (0,7026383 to 1 ,3632263), O (0,0100513 to 0,0369937), Fe (0,7356891 to 2,4381419), Ni (0,0612045 to 0,2269403), Si (1 ,4262848 to 3,2234101), K (0,0055605 to 0,0246689), as well as traces of F, Br, S, K. The propylene granules with Biomagnetic charge proves to be a stable and secure natural solid final product, capable of maintaining permanent positive and negative poles. The granules of the BIOMAGNETIC compound are injected into converting battery strips in rectangular, semi-circle, spiral, half-clamp models, with holes and pins, always allowing the mechanical coupling with the Hydroresonant compound in the other strip.

10. Preparation process of the "RECEIVING, CONVERTING AND EMITTING BATTERY OF THE ACTIVE MAGNETOHYDRORESONANT EFFECT", as defined in claims 1 and 2, **characterized by** the injection of the Hydroresonant and Biomagnetic compounds into solid strips, and the subsequent mechanical coupling in a BATTERY, wherein the propylene granules are injected with the energy charges from the hydroresonant and biomagnetic compounds by thermo-fusion in a high-pressure injection machine, with a clamp capacity of 120 to 600 tons, injection speed from 15 to 93 kg/cm², preferably in molds containing wells with a capacity higher than 15g of material. The strips may be rectangular, semi-circle, spiral, half-clamp models, with holes and pins that allow the mechanical coupling by pressure of the bands on each other, which forms the Receiving, Converting and Emitting Battery of the Active Magnetohydroresonant Effect.

11. Functioning and use of the "RECEIVING, CONVERTING AND EMITTING BATTERY OF THE ACTIVE MAGNETOHYDRORESONANT EFFECT", process of conversion of photoelectric energy from natural light, according to claims 4, 9 and 11, wherein it extracts the Vital Cosmic Energy from the neutrinos, converts it and permanently emits natural long-wave infrared, Vital Cosmic Energy and negative ions (anions) in the form of oscillating, pulsating and perpetuating cords. The active Magnetohydroresonant effect covers a frequency range that may reach from 0,1m to 100 km, increases the range of the electro-optic polarization of the tourmaline, in different spectral ranges of electronic transition bands, reaching the radio frequency spaces from 03 kHz to 300 GHz, and from ≤ 07 kHz to 720 GHz, inverted waves of negative bands, converting the electromagnetic charges loaded with positive ions (cations) into negative ions (anions), gravitons.

12. Functioning and use of the "RECEIVING, CONVERTING AND EMITTING BATTERY OF THE ACTIVE MAGNETOHYDRORESONANT EFFECT", process of conversion of photoelectric energy from natural light, according to claim 12, wherein it converts the electromagnetic waves in the generation and/or reception source and in its action range, producing a decontaminated pre-electronic environment.

13. Functioning and use of the "RECEIVING, CONVERTING AND EMITTING BATTERY OF THE ACTIVE MAGNETOHYDRORESONANT EFFECT", process of conversion of photoelectric energy from natural light, according to claims 12 and 13, wherein it converts electromagnetic waves from positive ions (cations) into negative ions (anions) if applied to electric systems. It irradiates the active Magnetohydroresonant effect, whenever a change of state and transference of energy occurs, perpetuating through the environments.

14. The use of the "RECEIVING, CONVERTING AND EMITTING BATTERY OF THE ACTIVE MAGNETOHYDRORESONANT EFFECT", process of conversion of photoelectric energy from natural light and transference of the active Magnetohydroresonant effect of the Battery, according to claims 11, 12, 13 and 14, wherein it is irradiated by active diffusors, acts from the point of its installation in the direction of the flow of electrons and molecules, in energized electric energy conducting cables or wires, radio frequency signals, running water pipes, combustion air flow, environment air flow, combustion flame flow, producing a pre-electronic environment.

15. The use of the "RECEIVING, CONVERTING AND EMITTING BATTERY OF THE ACTIVE MAGNETOHYDRORESONANT EFFECT", process of conversion of photoelectric energy from natural light and transference of the active Magnetohydroresonant effect of the Battery, according to claim 15, wherein it is applied in inert diffusors, metal cables or wires, plastic and polyester, acts or irradiates its energy in both directions, in a helical movement with a 6m diameter along the diffusor, producing a pre-electronic environment.

16. The use of the "RECEIVING, CONVERTING AND EMITTING BATTERY OF THE ACTIVE MAGNETOHYDRORESONANT EFFECT", and the action of the active Magnetohydroresonant effect, in accordance with claims 14, 15 and 16, wherein the battery is applied in the soil or in an inert diffusor for geobiologic protection. It neutralizes anomalies of the electric differential, corrects the electrostatic constant, telluric radiations caused by cracks, fissures, underground fault lines, underground water circulation, buried water pipes or power lines, as well as the ionizing effects of radon, making the environment healthy.

17. The use of the "RECEIVING, CONVERTING AND EMITTING BATTERY OF THE ACTIVE MAGNETOHYDRORESONANT EFFECT" in combustion systems of rotational and reciprocating motions of the Otto, Diesel and Braytone Cycles, as well as in controlled external combustion systems, cooking systems among others, according to claims 11, 12, 13 and 14, wherein it extracts astrophysical energies from the Air/Light, attaching it to be used in physicochemical activities with hydrogen. Hydrogen, then, will transmute its atomic structure, and activate an energy field which works in the electromagnetic conversion of positive ions (cations) into negative ions (anions), maintains the synchrony of cords in perpetual pulsation, produces light materialization, maintains a randomizing connector electromagnetic space-time warp (black hole), acts and refocuses the totality of energy. The new hyper-dimensional orbital camp permanently neutralizes the combination of elements which compose combustion, reduces the emission by 35% to 60% of the gases thereof, such as HC, CO, CO₂, NO₂, NOx, SO₂, O₃, MP, smoke, and other gases such as benzene and dioxins, while reducing consumption by 5% to 15%.

18. The use of the "RECEIVING, CONVERTING AND EMITTING BATTERY OF THE ACTIVE MAGNETOHYDRORESONANT EFFECT" in combustion systems of the Otto cycle, according to claims 14, 15, 16 and 18, wherein it is installed in the air filter inlet and in the fuel pipe, which also connects to the positive terminal cable of the battery, by means of a vector. It reduces the emission of greenhouse gases - GHG by up to 60%, while reducing fuel consumption by 5% to 15%.

19. The use of the "RECEIVING, CONVERTING AND EMITTING BATTERY OF THE ACTIVE MAGNETOHYDRORESONANT EFFECT" in combustion systems of the Diesel cycle, according to claims 11 and 18, wherein it is installed in the air filter inlet and in the fuel pipe. It reduces the emission of greenhouse gases - GHG by up to 30%, while reducing fuel consumption by 5% to 15%.

20. The use of the "RECEIVING, CONVERTING AND EMITTING BATTERY OF THE ACTIVE MAGNETOHYDRORESONANT EFFECT" in combustion cooking systems, according to claims 11 and 18, wherein it is installed in the form of clamp, in the hose or fuel pipe. It reduces the emission of greenhouse gases - GHG by up to 30%, while reducing fuel consumption by 15% to 25%.

21. The use of the "RECEIVING, CONVERTING AND EMITTING BATTERY OF THE ACTIVE MAGNETOHYDRORESONANT EFFECT" in external combustion natural gas systems, according to claims 11 and 18, wherein it is installed in the form of hollow curtain in the combustion air outlet, and in the form of clamp in the hose or fuel pipe. It reduces the emission of greenhouse gases - GHG by up to 30%, while reducing natural gas consumption by 15% to 25%.

22. The use of the "RECEIVING, CONVERTING AND EMITTING BATTERY OF THE ACTIVE MAGNETOHYDRORESONANT EFFECT" in external combustion systems, of heavy oils such as APF, BPE, BTE, OC4 and Diesel, according to claims 11 and 18, wherein it is installed in the form of hollow curtain in the combustion air outlet, and in the form of clamp in the hose or fuel pipe. It reduces the emission of greenhouse gases - GHG and smoke by up to 35%, while reducing consumption of APF, BPE, BTE, OC4 and Diesel by 5% to 12%.

23. The use of the "RECEIVING, CONVERTING AND EMITTING BATTERY OF THE ACTIVE MAGNETOHYDRORESONANT EFFECT" in external combustion Coke systems, according to claims 11 and 18, wherein it is installed in the form of hollow curtain in the combustion air outlet. It reduces the emission of greenhouse gases - GHG by up to 35%, while reducing Coke consumption by 5% to 10%.

24. The use of the "RECEIVING, CONVERTING AND EMITTING BATTERY OF THE ACTIVE MAGNETOHYDRORESONANT EFFECT" in external combustion systems, of biomasses, pomace, wood chips, fruit peels, fruit seeds and firewood, according to claims 11 and 18, wherein it is installed in the form of hollow curtain in the combustion air outlet. It reduces the emission of greenhouse gases - GHG, MP and smoke by up to 60%, while reducing consumption of biomasses, pomace, wood chips, fruit peels, fruit seeds and firewood by 5% to 10%. The fine ashes thereof contain low levels of contaminating material, and may be industrially employed.

25. The use of the "RECEIVING, CONVERTING AND EMITTING BATTERY OF THE ACTIVE MAGNETOHYDRORESONANT EFFECT" in external combustion systems, of Mineral and Vegetal Coal, according to claims 11 and 18, wherein it is installed in the form of hollow curtain in the combustion air outlet. It reduces the emission of greenhouse gases - GHG, MP and smoke by up to 45%, while reducing consumption of mineral coal by 5% to 10%. The fine ashes thereof contain low levels of contaminating material, and may be industrially employed.

26. The use of the "RECEIVING, CONVERTING AND EMITTING BATTERY OF THE ACTIVE MAGNETOHYDRORESONANT EFFECT" in electrical systems without physical contact with the conductive metals, fixed cables or on the lid of the electrical distribution panel box, in accordance with claims 11, 12, 13 and 14, wherein it reduces the generation of harmonics, and converts positive ions generated by the electromagnetic field into negative ions. It disseminates throughout the electrical system, harmonizes and synchronizes the relation between energy and the system charge. It reduces losses and energy consumption by 5% to 15%.

27. The use of the "RECEIVING, CONVERTING AND EMITTING BATTERY OF THE ACTIVE MAGNETOHYDRORESONANT EFFECT" in electrical systems in the MIG/MAG welding services, in accordance with claims 11, 12, 13, 14 and 27, wherein it reduces by 60,5% the emission of smoke and polluting gases, improving weld bead penetration and Vickers hardness.

28. The use of the "RECEIVING, CONVERTING AND EMITTING BATTERY OF THE ACTIVE MAGNETOHYDRORESONANT EFFECT", applied in any systems of fusion, transformation, fusion/injection, in electrical energy or in the air of fuel combustions process, in accordance with claims 11, 12, 13, 14, 15, 16, 18 and 27, wherein it transfers part of the Magnetohydroresonant effect properties in the fusion of siliceous iron, duralumin, in the fusion/injection of natural TR 15/50 light thermoplastic spheres. They start emitting negative ions (anions), permanently and perpetually.

29. The use of the "RECEIVING, CONVERTING AND EMITTING BATTERY OF THE ACTIVE MAGNETOHYDRORESONANT EFFECT" in communication systems, applied in the electrical energy and other energy sources which power the equipment that generate the signals, in accordance with claims 11, 12, 13, 14, 15 and 27, wherein it converts signals of radio broadcast, audio, video, image, data, internet, cell phone telephony system, GPS and satellites, in any range and band or inverse band. These are converted in the electric source of positive ions (cations) into negative ions (anions), signals which are transmitted, retransmitted (by relay stations) and received in negative ions, in the form of pulsating and perpetuating cords.

30. The use of the "RECEIVING, CONVERTING AND EMITTING BATTERY OF THE ACTIVE MAGNETOHYDRORESONANT EFFECT" in communication systems, to electromagnetic charges converted in the generation origin and transmitted through Aether, in accordance with claims 11, 12, 13, 14, 15, 27 and 30, wherein it charges the biosphere with negative ions, acting on the greenhouse gases - GHG - reducing acid rains, reestablishing the low ozone layer, a pre-electronic natural environment, as well as the insects' orientation systems.

31. The use of the "RECEIVING, CONVERTING AND EMITTING BATTERY OF THE ACTIVE MAGNETOHYDRORESONANT EFFECT" in communication systems, in accordance with claims 11, 12, 13, 14, 15, 27, 30 and 31, wherein it improves the quality of signals of audio, data, image and internet, also broadening the reach of signals of audio, image and data, thus reducing the radio, television and cell phone shadow zones, as it harmonizes and synchronizes the entire system.

32. The use of the "RECEIVING, CONVERTING AND EMITTING BATTERY OF THE ACTIVE MAGNETOHYDRORESONANT EFFECT" in residential and commercial water consumption systems, in the form of a clamp, according to claims 11 and 12, wherein it is externally applied. It produces better conductivity, fluidity and turbidity, stabilizes the Ph in basic values, reduces odors, breaks the acquired hardness, dissolves salts, reduces the consumption of soap and softeners in washing processes, and increases water potability.

33. The use of the "RECEIVING, CONVERTING AND EMITTING BATTERY OF THE ACTIVE MAGNETOHYDRORESONANT EFFECT" in industrial systems, water consumption and irrigation, externally applied, in sequence or in series around the conducting pipe, according to claims 11, 12, 18 and 33, wherein it impregnates the water with the active Magnetohydroresonant effect, which dissolves salt complexes (bicarbonates, sulfates, chlorates and "blood out of a stone"nitrates), breaking the hardness, reducing clogging, and the consumption of soap and softeners.

34. The use of the "RECEIVING, CONVERTING AND EMITTING BATTERY OF THE ACTIVE MAGNETOHYDRORESONANT EFFECT" in agricultural systems, applied in active and inert diffusing vectors, according to claims 11, 12, and 34, wherein it disseminates the active Magnetohydroresonant effect, increases photosynthesis, blocks the artificial electromagnetic radiations, and makes negative ions in the air and soil available for the plant. It also increases the plant's capacity to absorb micro-nutrients from the air and soil, improves the phytotonic effect and carbonic connection, generating better ramifications in the roots and capillaries, higher foliar mass and chlorophyll, with greater capacity to absorb and fix nitrogen. Furthermore, it increases the reproductive and productive capacity of the plants, increases the Brix degree of fruits and culms, produces more nutritious fruits, culms, grains, seeds and vegetables, with higher energetic value of up to 8.100. Finally, it increases carbon (CO₂) sinks, releases more oxygen (O₂) per hectare, producing more abundant harvests, more than 10% above the previous average.

35. The use of the "RECEIVING, CONVERTING AND EMITTING BATTERY OF THE ACTIVE MAGNETOHYDRORESONANT EFFECT" in sugar cane and sweet sorghum cultivation, applied in active and inert diffusing vectors, according to claims 11, 12, 34 and 35, wherein it increases the production of culm mass, Brix degree, alcohol and sugar, in the multiplication of plant starts and seeds, and the active Magnetohydroresonant effect which propagates throughout the planted areas, until the 3^{rd} generation.

36. The use of the "RECEIVING, CONVERTING AND EMITTING BATTERY OF THE ACTIVE MAGNETOHYDRORESONANT EFFECT" in vegetable, gramineous and cereal cultivation, applied in active and inert diffusing vectors, according to claims 11, 12, 34, 35 and 36, wherein it produces oil of superior quality and lower acidity index, grains with superior gluten force (W), increases productive and reproductive capacity, also reducing the incidence of fungi during the stocking process in barns.

37. The use of the "RECEIVING, CONVERTING AND EMITTING BATTERY OF THE ACTIVE MAGNETOHYDRORESONANT EFFECT" in the production, manufacturing and transformation processes, according to claims 11, 12, 15, 16, 18, 27, 29, 34 and 35, wherein the originated product is impregnated with part of the active Magnetohydroresonant effect properties. In the production of seeds and plant starts, the active Magnetohydroresonant effect properties are incorporated into their genes, and parts of these properties are fixed and manifested in the following generations, propagating until the 3^{rd} generation. The transference of properties to the products may occur during the industrial action of drying ovens, during cooking or boiling, in the production of distilled or fermented drinks, natural juices, edible oils and wheat derivatives, from cocoa in the production of chocolate, from coffee grains in roasting and grinding, in the juices obtained from fruits, as well as in the fusion of metals in the formation of metallic alloys.

38. In production lines of manufacture of rubber artifacts, according to claims 11, 12, 15, 18, 27, 29, 34 and 38, wherein it recovers the original properties of latex, such as elasticity, resistance to fatigue, improvement in the Shore A hardness, resistance to De Mattia flex, resistance to abrasion, resistance to impact, to abrasion, compression, shearing and traction, and is also impregnated with part of the Magnetohydroresonant technology effects, being able to emit negative ions.

39. The use of the "RECEIVING, CONVERTING AND EMITTING BATTERY OF THE ACTIVE MAGNETOHYDRORESONANT EFFECT" in sugar cane and grapevine cultivations, during the entire production cycle, by means of diffusing vectors, according to claim 35, wherein the active Magnetohydroresonant effect irradiated remains alive after grape fermentation and sugar cane fermentation and distillation, producing Magnetohydroresonant wine and cachaça, with the capacity to permanently emit negative ions.
